# EUROPÄISCHE PATENTANMELDUNG

(11) **EP 4 631 785 A1**
(43) Veröffentlichungstag der Anmeldung: **15.10.2025**
(21) Anmeldenummer: 25169322.2
(22) Anmeldetag: 09.04.2025
(51) Int. Cl.: B60P 3/025, B60H 1/32, B60P 3/04, B60P 3/30, B60H 1/00, B60P 3/20, F24F 5/00, F25D 7/00

(54) **FAHRZEUGANHÄNGER MIT INTEGRIERTER KÜHLVORRICHTUNG**

(30) Priorität: 12.04.2024 DE 202024101820 U
(71) Anmelder: Vitt, Wolfgang, 57074 Siegen (DE)
(72) Erfinder: Vitt, Wolfgang, 57074 Siegen (DE)
(74) Vertreter: Klüppel, Walter

(57) **Zusammenfassung**

Es wird ein Fahrzeuganhänger (10) vorgeschlagen, der ein durch ein Kraftfahrzeug mitführbares Anhänger-Fahrgestell (10a) einen Anhängeraufbau (10b) und eine integrierte Kühlvorrichtung (1) umfasst. Erfindungsgemäß ist vorgesehen, dass die integrierte Kühlvorrichtung (1) einen den Fahrzeuganhänger (10) und/oder einen daran angrenzenden Umgebungsbereich umfassenden, gekühlten Aufenthaltsbereich (R) für Personen bereitstellt, indem sie durch Wasserzerstäubung einen wasserhaltigen Kühlnebel (9) erzeugt und in den Aufenthaltsbereich abgibt.

## Beschreibung

Die Erfindung betrifft einen Fahrzeuganhänger mit einer integrierten Kühlvorrichtung.

Herkömmliche Fahrzeuganhänger weisen - abgesehen von einem durch ein Kraftfahrzeug mitführbaren Anhänger-Fahrgestell und einem Anhängeraufbau - häufig auch eine integrierte Kühlvorrichtung auf, beispielsweise einen Kühlschrank zum Kühlen von durch den Fahrzeuganhänger mitgeführten Speisen oder sonstigen Waren, die auf dem Fahrzeuganhänger ausgestellt, angeboten oder verkauft werden.

Während zur Kühlung solcher Waren herkömmliche Kühlmöglichkeiten wie Kühlschränke zur Verfügung stehen, ist eine Kühlung der unter Umständen deutlich wärmeren Umgebungsluft in einem Aufenthaltsbereich für Personen, die sich nahe des Anhängers aufhalten und denen die Waren oder andere Dinge auf dem Anhänger präsentiert werden sollen, meist schwierig und weniger effizient, da die Umgebungsluft rasch und in viele Richtungen entweichen kann und hierzu schon leichte Windböen genügen.

Selbst wenn nur ein kürzeres Verweilen von Passanten an oder auf dem Anhänger oder in seinem unmittelbaren Umgebungsbereich bezweckt ist, kann dies bei höheren Außentemperaturen, insbesondere im Sommer für Personen belastend sein.

Andererseits ist bei feststehenden Gebäuden bekannt, zum Zwecke des Brandschutzes Sprinkleranlagen einzubauen, die im Falle eines ausbrechenden Feuers bzw. Brandes in dem Gebäude beginnen, Löschwasser zu versprühen, sobald ein oder mehrere Brandmelder, die mit sich bei Feuertemperatur verbiegenden Bimetallstreifen versehen sind, den Ausbruch des Feuers detektieren.

Es ist die Aufgabe der vorliegenden Erfindung, einen bekannten Fahrzeuganhänger dahingehend weiterzubilden, dass er bei höheren Außentemperaturen, etwa im Sommer einen Aufenthalt von Personen am Fahrzeuganhänger oder in seinem unmittelbaren Umgebungsbereich angenehmer und/oder weniger belastend macht. Es ist ferner die Aufgabe der vorliegenden Erfindung, mit Hilfe des derart weitergebildeten Fahrzeuganhängers eine mobile Station bereitzustellen, die den Aufenthalt von Personen angenehmer und/oder weniger belastend macht.

Diese Aufgabe wird durch den Gegenstand der Schutzansprüche 1 und 13 gelöst.

Gemäß Anspruch 1 wird ein Fahrzeuganhänger mit einer integrierten Kühlvorrichtung vorgeschlagen, umfassend
- ein durch ein Kraftfahrzeug mitführbares Anhänger-Fahrgestell,
- einen Anhängeraufbau und
- eine integrierte Kühlvorrichtung,
wobei erfindungsgemäß die integrierte Kühlvorrichtung einen den Fahrzeuganhänger und/oder einen daran angrenzenden Umgebungsbereich umfassenden, gekühlten Aufenthaltsbereich für Personen bereitstellt, indem sie durch Wasserzerstäubung einen wasserhaltigen Kühlnebel erzeugt und in den Aufenthaltsbereich abgibt.

Unter einem Aufenthaltsbereich für Personen ist im Rahmen dieser Anmeldung insbesondere ein Aufenthaltsbereich zu verstehen,
- der den Fahrzeuganhänger umfasst oder
- der einen an den Fahrzeuganhänger angrenzenden Umgebungsbereich umfasst oder
- der sowohl den Fahrzeuganhänger als auch den daran angrenzenden Umgebungsbereich umfasst.

Demzufolge kann die integrierte Kühlvorrichtung den erzeugten wasserhaltigen Kühlnebel beispielsweise
- in Richtung der Grundfläche, insbesondere in Richtung der Bodenfläche des Fahrzeuganhänger und/oder
- in Richtung des angrenzenden, diese Grundfläche bzw. Bodenfläche umgebenden Umgebungsbereichs
abgeben.

Vorzugsweise wird das Wasser dabei so fein zerstäubt, d.h. so fein vernebelt, dass es die Grundfläche bzw. Bodenfläche des Fahrzeuganhängers und/oder diejenige des Umgebungsbereichs gar nicht erst erreicht. Der Fahrzeugboden und andere Flächen werden also nicht nass; insbesondere kommt es nicht zur Bildung von Wasserfilmen, Wassertropfen oder gar von Pfützen.

Insbesondere wenn im Rahmen dieser Anmeldung von einem gekühlten bzw. zu kühlenden Aufenthaltsbereich oder von einem überdachten Aufenthaltsbereich die Rede ist, kann der Aufenthaltsbereich wie oben definiert sein.

Optional kann der Aufenthaltsbereich zusätzlich noch einen Außenbereich mit umfassen, der innerhalb der Reichweite des erzeugten Kühlnebels liegt. Beispielsweise kann außerhalb eines überdachten Umgebungsbereichs ein freiliegender, d.h. nicht überdachter, aber dennoch mit dem erzeugten Kühlnebel durchsetzter Außenbereich liegen; in diesem Fall kann also der vom Kühlnebel durchsetzte Außenbereich von dem Aufenthaltsbereich mit umfasst sein.

Vorzugsweise ist die Kühlvorrichtung dazu bestimmt und/oder eingerichtet, bei geöffneten Seitenwänden des Anhängeraufbaus einen durch den wasserhaltigen Kühlnebel gekühlten Aufenthaltsbereich für Personen bereitzustellen. Der Nebel wird durch Düsen erzeugt, denen Wasser unter Hochdruck, d.h. mit einem Überdruck zugeführt wird. Die dadurch bewirkte Fein- bzw. Feinstvernebelung, d.h. Wasserzerstäubung reichert die Umgebungsluft mit zerstäubtem Wasser an. Dabei wird eine Kühlleistung erbracht, indem durch das Verdunsten des Wassers Wärme entzogen wird; diese Wärme wird insbesondere der Luft bzw. der Umgebungsluft entzogen.

Vorzugsweise umfasst der mit der integrierten Kühlvorrichtung versehene Fahrzeuganhänger eine zumindest vorübergehend einrichtbare Überdachung zum Überdachen des Aufenthaltsbereichs in oder auf dem Fahrzeuganhänger und/oder in dem angrenzenden Umgebungsbereich, wobei die Kühlvorrichtung den wasserhaltigen Kühlnebel von der Überdachung aus in den Aufenthaltsbereich abgibt.

Vorzugsweise ist vorgesehen, dass die Kühlvorrichtung ein in dem Aufenthaltsbereich befindliches Luftvolumen von oben her mit eingesprühtem wasserhaltigen Kühlnebel anreichert und/oder sättigt. Der Kühlnebel kann beispielsweise an der Unterseite und/oder an einem Außenrand der Überdachung erzeugt werden.

Vorzugsweise ist vorgesehen, dass die Kühlvorrichtung den wasserhaltigen Kühlnebel ganz, überwiegend oder zumindest teilweise von einem Außenrand der Überdachung aus erzeugt. Die randseitige Umgrenzung des Luftvolumens seitlich von außen her, vorzugsweise ringsherum und/oder von allen Seiten, verhindert besonders wirksam eine Durchmischung der gekühlten Luft im Aufenthaltsbereich und der wärmeren Luft in der sonstigen Atmosphäre am Aufstellungsort des Anhängers.

Vorzugsweise ist vorgesehen, dass die Kühlvorrichtung den wasserhaltigen Kühlnebel mit Hilfe einer Düsenanordnung von Kühlnebeldüsen erzeugt und abgibt, an die unter Überdruck stehendes Wasser zum Zerstäuben herangeführt wird. Für diese Vernebelung bzw. Fein- oder Feinstvernebelung, d.h. Zerstäubung kann beispielsweise Wasser über ein Zuleitungssystem, insbesondere Rohrsystem unter einem Überdruck herangeführt werden.

Vorzugsweise ist vorgesehen, dass der Fahrzeuganhänger eine Anzahl von Wandelementen aufweist, die
- in einer in Überkopfhöhe befindlichen ersten Position, in der sie den Aufenthaltsbereich und/oder Umgebungsbereich zumindest teilweise überdachen, und
- in einer zweiten Position, in der sie - etwa bei Nichtgebrauch der integrierten Kühlvorrichtung - den Fahrzeuganhänger als Seitenwände verschließen und/oder sichern,
   positionierbar und/oder montierbar sind,
   wobei die Wandelemente an oder nahe einer zum Außenrand der Überdachung gehörigen Kante mit jeweiligen Druckleitungen, Druckleitungsabschnitten und/oder Kühlnebeldüsen versehen oder versehbar sind.

Vorzugsweise ist beispielsweise vorgesehen, dass der Fahrzeuganhänger mit Hilfe ausklappbarer und/oder ausschwenkbarer Wandelemente den Kühlnebel in einen überdachten Umgebungsbereich und/oder Aufenthaltsbereich hineinsprüht, der die Grundfläche des Fahrgestells von außen umgibt. Die Wandelemente können insbesondere Seitenwände des Anhängers bzw. Trailers sein, die beispielsweise ausklappbar oder in zwei Orientierungen montierbar, vorzugsweise jedoch verschwenkbar an dem Anhängeraufbau montiert sind. Sie können beispielsweise um ihre in Transportposition obere Kante schwenkbar sein; z.B. durch hydraulische, pneumatische oder elektrische Hilfsmittel oder auch manuell mit einer Kurbel. Mit Hilfe der Wandelemente, die in der angehobenen, hochgeschwenkten oder anderweitig seitlich über die Anhängergrundfläche emporragenden ersten Position positioniert oder zumindest vorübergehend positioniert sind, kann der wasserhaltige Nebel von Flächenbereichen der Überdachung aus, die sich seitlich außerhalb der Transportabmessungen des Anhängers befinden, in den Umgebungs- und/oder Aufenthaltsbereich abgegeben werden.

Ferner kann vorgesehen sein, dass der Fahrzeuganhänger und/oder der Anhängeraufbau zwischen den Seitenwänden vier Ecksäulen, d.h. eckseitige Dachstützen aufweist. Entlang dieser oder durch diese hindurch kann beispielsweise Wasser unter Druck, z.B. durch Druckleitungen und/oder Druckleitungsabschnitte nach oben befördert werden.

Vorzugsweise ist vorgesehen, dass der Fahrzeuganhänger eine Anzahl von Eckbereichsüberdachungen aufweist, die zwischen je zwei in der ersten Position angeordneten Wandelementen montierbar und/oder positionierbar sind. Die Eckbereichsüberdachungen können an einer oder an zwei angrenzenden Wandelementen bzw. Seitenwänden, die in der ersten Position jeweils eine Überdachung in einer von vier Hauptrichtungen bilden, montiert, insbesondere aufgespannt sein und dadurch die Fläche der Überdachung auch in diagonaler Richtung vergrößern. Die Eckbereichsüberdachungen sind z.B. faltbare Planen, die aufgespannt zumindest bis zur Verbindungslinie zwischen je einer Außenecke der benachbarten, in Umfangsrichtung rechten und linken Wandelemente bzw. Seitenwände reichen. Nach innen, d.h. in Richtung der eckseitigen Dachstützen reichen die Planen beispielsweise ungefähr bis an je eine Innenecke des rechten und linken Wandelements heran und überspannen so die Fläche zwischen einander zugewandten Seitenkanten beider Wandelemente.

Vorzugsweise ist vorgesehen, dass die Düsenanordnung
- Kühlnebeldüsen, die relativ zur vertikalen Richtung in mindestens zwei unterschiedlich großen Neigungswinkeln orientiert sind,
- Kühlnebeldüsen, die in Umfangsrichtung um den Mittelpunkt oder die Mittelachse des Anhängeraufbaus herum gemäß mindestens vier, mindestens acht oder mindestens zwölf unterschiedliche Richtungen orientiert angeordnet sind,
- Kühlnebeldüsen, die in Umfangsrichtung um die Mittelachse ihrer jeweiligen Druckleitung oder ihres jeweiligen Druckleitungsabschnitts herum in mindestens zwei, mindestens drei oder mindestens vier verschiedenen azimutalen Winkeln orientiert angebracht sind, und/oder
- mindestens zwei Sorten von Kühlnebeldüsen mit unterschiedlich großem Kegelöffnungswinkel ihres jeweils versprühten Kühlkegels
aufweist.

Durch diese Einzelmaßnahmen oder deren Kombination lassen sich Ausmaß und Effizienz der Kühlung noch weiter steigern, insbesondere wenn nicht entlang des gesamten Umfangs der Überdachung ein gleichmäßiger oder zumindest ähnlich großer Abstand zwischen benachbarten Kühlnebeldüsen eingehalten werden kann. Größere Öffnungswinkel einiger Düsen und/oder durch eine in Umfangsrichtung oder andere Richtungen verschwenkte Ausrichtung einiger Düsen bzw. ihrer Sprührichtung können somit auch größere Abstände zwischen nächstbenachbarten Düsen kompensiert und/oder überbrückt werden.

Vorzugsweise ist vorgesehen, dass jede Kühlnebeldüse eine feste, fest einstellbare und/oder fest eingestellte Sprührichtung, insbesondere Hauptsprührichtung besitzt.

Insbesondere kann vorzugsweise vorgesehen sein, dass jede Kühlnebeldüse seitlich so an einer Umfangswandung einer jeweiligen Druckleitung montiert oder davon abgezweigt ist, dass
- ihre Sprührichtung, insbesondere Hauptsprührichtung relativ zur
- lokalen Verlaufsrichtung der Druckleitung am Montierungs- oder Abzweigungspunkt dieser Kühlnebeldüse
eine feste, fest einstellbare und/oder fest eingestellte Ausrichtung besitzt.

Vorzugsweise umfasst der Fahrzeuganhänger weiterhin
- einen Wasseranschluss, einen Wassertank und/oder eine Anlage zur Wassergewinnung beispielsweise durch Umkehrosmose,
- eine Wasserpumpe und/oder
- eine Entkeimungs- und/oder Filteranlage zur Verbesserung der Wasserqualität.

Diese exemplarisch aufgezählten Elemente können Bestandteile einer Druckwasserquelle sein. Die Entkeimungs- und/oder Filteranlage kann insbesondere eine UV-Filteranlage und/oder einen Mineralienfilter umfassen.

Beispielsweise kann am Fahrzeuganhänger ein Wasseranschluss zur Aufnahme von Wasser von einem Hydrant, einem herangeführten Wasserschlauch oder einer sonstigen Wasserleitung vorgesehen sein.

Zusätzlich oder alternativ kann auch ein Wasseranschluss zur Abgabe von Wasser am Fahrzeuganhänger vorgesehen sein.

Vorzugsweise ist vorgesehen, dass der Fahrzeuganhänger je Wandelement eine separate, mit jeweils mehreren Kühlnebeldüsen versehene Druckleitung aufweist, deren entlang des Wandelements verlaufender Druckleitungsabschnitt mittels
- eines druckbeständigen Schraubgewindes,
- eines biegsamen Druckleitungsübergangs oder
- eines gelenkigen Druckleitungsübergangs
mit einem von einer Druckwasserquelle herangeführten jeweiligen Druckleitungsabschnitt verbunden oder verbindbar sind. Damit können die Druckleitungen trotz der Beweglichkeit der Wandelemente vormontiert, d.h. fest verbaut sein.

Beispielsweise kann jeweils ein biegsamer Druckleitungsübergang in Form eines druckbeständigen Schlauches vorgesehen sein.

Sämtliche Druckleitungen können Überdruckleitungen bzw. Hochdruckleitungen sein, die für beliebige in dieser Anmeldung genannten numerischen Druckbereiche und/oder Druckangaben, beispielsweise für Drücke oberhalb von 30 bar, für Drücke oberhalb von 50 bar oder beispielsweise für einen Arbeitsdruck zwischen 50 und 90 bar, vorzugsweise von 70 bar ausgelegt sind.

Die Druckleitungen können - beispielsweise von einem Mittelblock und/oder von einer Druckwasserquelle ausgehend -
- unterhalb der Bodenfläche des Fahrzeuganhängers bis hin zu Eckbereichen bzw. eckseitigen Dachstützen geführt bzw. verlegt sein,
- an oder in diesen Eckbereichen bzw. eckseitigen Dachstützen, beispielsweise in Kabelkanälen, nach oben bis hin zu Eckbereichen des Anhängerdachs und/oder bis zu einem Übergang zu den beweglichen Wandelementen hochgeführt sein und/oder
- an den Übergängen zu den beweglichen Wandelementen wahlweise weiterlaufen oder in ein Rohrsystem aus biegesteifen Rohren münden und/oder in sonstiger Weise an nachfolgende Druckleitungsabschnitte angeschlossen sein.

Angesichts eines Betriebsdruck von oberhalb von 30 bar, beispielsweise von 70 bar können an den Übergängen zu den beweglichen Wandelementen 15 Schlauchbruchsicherungen vorgesehen sein, die ein Brechen oder eine anderweitige Abnutzung oder Beschädigung der Schläuche bzw. der zumindest stellenweise biegsamen Druckleitungen verhindern. Die Schlauchbruchsicherungen können im Falle eines Lecks auch eine sofortige Abschaltung der Kühlvorrichtung, insbesondere der Druckwasserquelle und/oder der Wasserpumpe veranlassen.

Das druckbeständige Schraubgewinde oder der biegsame oder gelenkige Druckleitungsübergang kann beispielsweise je Druckleitung jeweils am Übergang zwischen
- einem ersten Leitungsabschnitt, der von einer Druckwasserquelle oder von einem von dort kommenden vorgelagerten Leitungsabschnitt ausgehend beispielsweise in horizontaler Richtung zu Eckbereichen des Anhängergrundrisses quergeführt ist und/oder nach oben zur Überdachung hochgeführt ist,
- einem zweiten Leitungsabschnitt, der entlang des jeweiligen Wandelements verläuft, vorgesehen sein.

Vorzugsweise ist ferner eine Anzahl, insbesondere eine Mehrzahl von Druckwasserleitungen vorgesehen. Diese können ebenfalls mehrere, u.a. erste und zweite Leitungsabschnitte aufweisen.

Die ersten Leitungsabschnitte der Druckleitungen können beispielsweise entlang einer Anzahl von bis zu vier Ecksäulen oder sonstigen Dachträgern bis in Überkopfhöhe bzw. bis in Höhe der Überdachung hochgeführt sein; insbesondere wenn die Druckwasserquelle - die zur Abnahme, Gewinnung, Bevorratung, Aufbereitung, Druckbeaufschlagung und/oder Beförderung von Wasser dient - im Höhe des Fahrgestells und/oder in Bodennähe des Anhängeraufbaus oder in einer allenfalls mittleren Bedienhöhe im Anhängeraufbau angeordnet sind.

Statt in Eckbereichen können die ersten Leitungsabschnitte der Druckleitungen alternativ auch beispielsweise in einem oder mehreren Seitenbereichen, etwa einem vorderen Seitenbereich nahe der Anhängerkupplung und/oder in einem hinteren Seitenbereich, oder in der Mitte der Anhängerfläche bis in Überkopfhöhe bzw. Dachhöhe hochgeführt sein.

Der zweite, entlang des jeweiligen Wandelements verlaufende Leitungsabschnitt kann beispielsweise
- L-förmig entlang einer Seitenkante und einer Unter- bzw. Außenkante oder
- U-förmig entlang einer Seitenkante und einer Unter- bzw. Außenkante sowie einer entgegengesetzten Seitenkante
des Wandabschnitts bzw. der hochgeschwenkten Seitenwand verlaufen und entlang dieses L-förmigen bzw. U-förmigen Verlaufs mit einer jeweiligen Anzahl von Druckwasserventilen, d.h. Kühlnebeldüsen versehen sein.

Vorzugsweise ist vorgesehen, dass die Kühlvorrichtung den wasserhaltigen Kühlnebel durch adiabatisches Zerstäuben, d.h. durch eine adiabatische Verdunstung erzeugt. Durch das adiabatische Verdunsten wird die Oberfläche des Wasser um einen Faktor von etwa 2.000.000 erhöht. Aufgrund dieser Erhöhung seiner Oberfläche verdunstet das Wasser mit einer um einem Faktor von ca. 850 erhöhten Verdunstungsgeschwindigkeit. Pro Liter verdunsteten Wassers wird der Umgebungsluft eine Kühlleistung, d.h. eine Wärmemenge pro Zeit in Höhe von beispielsweise 650 Watt entzogen. Werden beispielsweise 150 Liter Wasser mit einer Kühlleistung von 650 Watt/Liter verdunstet, so wird insgesamt eine Kühlleistung von 97,5 kW erreicht.

Vorzugsweise ist insbesondere vorgesehen, dass die Kühlvorrichtung den wasserhaltigen Kühlnebel aus Wasser erzeugt, das mit einem Überdruck größer als 30 bar, vorzugsweise größer als 50 bar - beispielsweise mit einem Überdruck zwischen 60 und 80 bar, vorzugsweise z.B. bei 70 bar - gefördert wird. Durch den starken Überdruck bzw. Hochdruck wird eine Kühlleistung erbracht, indem durch das Verdunsten des Wassers der umgebenden Luft Wärme entzogen wird. Die Kühlleistung kann beispielsweise zwischen 300 und 1000 Watt pro Liter verbrauchten Wassers betragen; beispielsweise 650 Watt pro Liter. Der wasserhaltige Kühlnebel besteht insbesondere aus Wasserdampf, d.h. aus Wasser in seinem gasförmigen Aggregatzustand.

Das verdunstete Wasser ist in einem Abstand von ca. 30 cm von den Kühlnebeldüsen nicht mehr sichtbar. Der Aufenthaltsbereich wird dadurch gekühlt, ohne dass darin befindliche Personen oder Gegenstände nass würden bzw. mit einem Beschlag aus Wasser bedeckt würden.

Erfindungsgemäß wird ferner eine mobile Kühlnebelstation bereitgestellt, die
- den hier beschriebenen Fahrzeuganhänger sowie vorzugsweise
- eine Anzahl von in dem gekühlten Aufenthaltsbereich bereitgestellten Stühlen, Bänken oder sonstigen Sitzgelegenheiten und/oder
- eine Anzahl von den gekühlten Aufenthaltsbereich abgrenzenden Seitenabsperrungen und/oder eine anderweitige Seitenwandung, insbesondere Umfangswandung
aufweist.

Hierbei kann der Aufenthaltsbereich optional einen durch den Einzugs- oder Erstreckungsbereich des erzeugten Kühlnebels abgedeckten Außenbereich mit umfassen, selbst wenn dieser Außenbereich nicht durch den Fahrzeuganhänger überdacht ist.

Eine bevorzugte Weiterbildung sieht vor, dass die Kühlnebelstation als Kühlzelt ausgebildet ist, das ein Entweichen des wasserhaltigen Kühlnebels verhindert und/oder erschwert, wobei das Kühlzelt vorzugsweise folgendes umfasst:
- den beschriebenen Fahrzeuganhänger,
- eine zumindest vorübergehend eingerichtete, vorzugsweise kühlnebeldichte Seitenwandung und/oder Umfangswandung, die
   - seitlich außerhalb des Fahrzeuganhängers, insbesondere um den Fahrzeuganhänger herum und/oder seitlich beabstandet vom Fahrzeuganhänger aufgebaut ist und/oder
   - den Fahrzeuganhänger sowie einen ihn umgebenden Aufenthaltsbereich und/oder Umgebungsbereich seitlich umgibt, insbesondere seitlich vollständig umschließt, und
- eine zumindest vorübergehend eingerichtete, vorzugsweise kühlnebeldichte Überdachung zum Überdachen des Aufenthaltsbereichs in oder auf dem Fahrzeuganhänger und/oder in dem angrenzenden Umgebungsbereich.

Die Umfangswandung kann beispielsweise aus einer Mehrzahl von Seitenabsperrungen oder anderweitigen Seitenwandabschnitten oder Seitenwandelementen gebildet sein; etwa aus solchen, die im Fahrzeuganhänger mitführbar sind, aber nicht notwendigerweise zum Anhänger-Fahrgestell oder Anhängeraufbau des Fahrzeuganhängers zugehörig sind.

Vorzugsweise ist vorgesehen, dass die Überdachung
- bis an die Umfangswandung der Kühlnebelstation und/oder des Kühlzelts herangeführt,
- mit der Umfangswandung verbunden und/oder
- durch die Umfangswandung aufgespannt ist.

Vorzugsweise ist vorgesehen, das die Kühlnebelstation und/oder das Kühlzelt einen Rundgang aufweist, der den Fahrzeuganhänger umgibt, wobei der Rundgang
- von der Umfangswandung seitlich umgeben ist und/oder
- von der Überdachung überdacht, insbesondere überspannt ist.

Gemäß einer Weiterbildung kann vorgesehen sein, dass die Überdachung eine Dacherweiterung aufweist, die
- von Wandelementen des Fahrzeuganhängers ausgehend, insbesondere
- von Unterkanten und/oder Seitenkanten seitlich ausgeklappter und/oder ausgeschwenkter Wandelemente ausgehend
einen verbleibenden Abstand bis zur Umfangswandung des Kühlzelts, insbesondere bis zu einem oberen Rand der Umfangswandung überbrückt.

Vorzugsweise ist vorgesehen, dass die Überdachung und/oder die Umfangswandung eine Außenhaut der Kühlnebelstation und/oder des Kühlzelts zum Einschließen des wasserhaltigen Kühlnebels bilden, wobei vorzugsweise
- die Umfangswandung insbesondere kühlnebeldichte Seitenflächenelemente, etwa in Form geschlossener Planen und/oder geschlossener oder zumindest feinporiger Gewebeflächen aufweist und
- die Überdachung zwischen dem Fahrzeuganhänger und der Umfangswandung insbesondere kühlnebeldichte Dachflächenelemente, etwa in Form geschlossener Planen und/oder geschlossener oder zumindest feinporiger Gewebeflächen aufweist.

Der Ausdruck kühlnebeldicht bedeutet im Rahmen dieser Anmeldung, dass der wasserhaltige Kühlnebel nicht ohne weiteres die Flächenelemente, insbesondere die Seitenflächen- und/oder Dachflächenelemente selbst durchdringen kann. Dies ist bei durchgehend flächigen Kunststoffplanen gegeben, aber auch durch hinreichend dichte Gewebe, die auch bei Zugluft nicht oder kaum winddurchlässig sind.

Insbesondere kann der Ausdruck kühlnebeldicht im Rahmen dieser Anmeldung im Sinne von klimatisch dicht oder klimatisch trennend verstanden werden; der eingeschlossene Kühlnebel ist insbesondere von der umgebenden Atmosphäre der freien Landschaft, Stadt oder sonstigen Außenumgebung, in der der Fahrzeuganhänger und somit die mobile Kühlnebelstation bzw. der Kühlzelt aufgestellt ist, klimatisch dicht abgeschirmt, d.h. klimatisch und/oder atmosphärisch getrennt.

Insbesondere kann der Ausdruck "kühlnebeldicht" im Rahmen dieser Anmeldung im Sinne von winddicht oder windundurchlässig verstanden werden.

Alternativ jedoch kann der Ausdruck kühlnebeldicht im Rahmen dieser Anmeldung auch im Sinne von "begrenzt winddurchlässig" verstanden werden, und zwar vorzugsweise dergestalt, dass bei Wind zwar ein geringer Luftaustausch möglich ist, aber mit so geringer Strömungsgeschwindigkeit und/oder mit einer so geringen Menge ausgetauschter Luft pro Zeit, dass der Kühlnebel nicht oder zumindest nicht wesentlich aus der Kühlnebelstation bzw. dem Kühlzelt entweicht. Dies lässt sich z.B. durch genügend kleine Poren bzw. Öffnungen im Gewebe sicherstellen.

Die jeweiligen Ausgestaltungen, die auch bei ggfs. erwünschtem, aber begrenztem Luftaustausch ein Fortblasen des Kühlnebels verhindern und somit das Einschließen des Kühlnebels ermöglichen, ergeben sich im Zweifelsfall aus praktischen Versuchen.

Vorzugsweise sind die Flächenelemente für die Außenhaut, d.h. für die Umfangswandung und/oder Überdachung - also konkret beispielsweise die dafür vorgesehenen Planen und/oder Gewebeflächen - UV-absorbierend oder zumindest um jeweils mindestens 80 %, vorzugsweise um jeweils mindestens 90 % UVreduzierend.

Vorzugsweise ist vorgesehen, dass die Überdachung eine Strebenkonstruktion mit starren Dachstreben, insbesondere in Form eines Dachstrebenkranzes oder Dachstrebennetzes aufweist, die bzw. der mit einem oberen Bereich der Umfangswandung des Kühlzelts fest verbunden ist.

Vorzugsweise ist vorgesehen, dass in der Überdachung und/oder in einem oberen Bereich der Umfangswandung Luftaustauschbereiche vorgesehen sind, die
- vorzugsweise flach und/oder schmal ausgebildet sind,
- zumindest einen geradlinigen Durchzug von Zugluft durch das Kühlzelt verhindern und
- das Kühlzelt in einem oberen Bereich durchquerende Zugluft zu einem mindestens zweimaligen, vorzugsweise mindestens dreimaligen, insbesondere mindestens viermaligen Richtungswechsel zwingen, insbesondere zu Richtungswechseln um jeweils zumindest 90° bis 180°, vorzugsweise um jeweils zumindest 135° bis 180°.

Vorzugsweise ist vorgesehen, dass die Seitenwandung und/oder Umfangswandung einen oder vorzugsweise zumindest zwei verschließbare Personeneingänge aufweist, beispielsweise an zwei zueinander gegenüberliegenden Seiten der Umfangswandung.

Erfindungsgemäß wird ferner ein Verfahren vorgeschlagen zum Bereitstellen eines mobilen, gekühlten Aufenthaltsbereichs für Personen, der durch einen durch Wasserzerstäubung erzeugten wasserhaltigen Kühlnebel gekühlt und/oder kühlbar ist. Dabei werden an den in dieser Anmeldung beschriebenen mobilen Fahrzeuganhänger mit integrierter Kühlvorrichtung
- eine mindestens zweiseitig über den Fahrzeuganhänger seitlich hinausragende Überdachung und
- eine den Fahrzeuganhänger beabstandet zu diesem seitlich umgebende, vorzugsweise vollständig umschließende Umfangswandung
ausgebildet.

Erfindungsgemäß wird ferner ein Verfahren zum Betreiben einer Kühlnebelstation, insbesondere eines Kühlzelts mit einem gekühlten Aufenthaltsbereich für Personen bereitgestellt, der durch einen durch Wasserzerstäubung erzeugten wasserhaltigen Kühlnebel gekühlt wird. Dabei wird zur Erzeugung des Kühlnebels eine in den mobilen Fahrzeuganhänger integrierte Kühlvorrichtung in der Weise betrieben, dass mit ihr eine zeitlich getaktete, intervallweise Kühlnebelerzeugung durchgeführt wird.

Vorzugsweise ist dabei vorgesehen, dass bei der zeitlich getakteten, intervallweisen Kühlnebelerzeugung die Dauer der zeitlich voneinander beabstandeten Kühlperioden so eingestellt wird, dass der erzeugte Kühlnebel in jeder Kühlperiode solange kontinuierlich erzeugt wird, bis die Umgebungsluft
- die von der Lufttemperatur abhängige maximale Sättigung, d.h. die maximale Luftfeuchtigkeit und/oder
- die Kühlgrenztemperatur, d.h. die von der Lufttemperatur und der maximalen Luftfeuchtigkeit abhängige Feuchtkugeltemperatur erreicht.

Vorzugsweise ist vorgesehen, dass bei der zeitlich getakteten, intervallweisen Kühlnebelerzeugung
- die Dauer von Kühlpausen zwischen den zeitlich voneinander beabstandeten Kühlperioden so eingestellt wird, dass
- von der Umgebungsluft nicht aufgenommener Kühlnebel bis zum Ende der Kühlpause oder schon vorher abgebaut, d.h. in der Umgebungsluft gelöst ist.

Vorzugsweise ist dabei vorgesehen, dass der zeitlich getakteten, intervallweisen Kühlnebelerzeugung vorangehend eine Gesamtkühlung des gesamten durch die Kühlnebelstation und/oder das Kühlzelt eingeschlossenen Luftvolumens durchgeführt wird, bis
- das eingeschlossene Luftvolumens mit Wasserdampf gesättigt ist und/oder
- alle Oberflächen innerhalb der Kühlnebelstation, insbesondere des Kühlzelts mit einem Wasserfilm bedeckt sind.

Einige exemplarische Ausführungsbeispiele werden nachstehend mit Bezug auf die Figuren beschrieben. Es zeigen:
- Figur 1: den hier vorgeschlagenen Fahrzeuganhänger in zwei verschiedenen Ansichten von der Seite und von hinten sowie für jeweils zwei verschiedene Positionen seiner Wandelemente, jeweils rein schematisch dargestellt,
- Figur 2: eine schematische Draufsicht auf den Fahrzeuganhänger gemäß Figur 1 mit in einer Überdachung, die in einer ersten Position positionierte Wandelemente des Fahrzeuganhängers umfasst,
- Figur 3: die erfindungsgemäß vorgesehene Kühlvorrichtung gemäß einer lediglich beispielshafte Ausführungsform in schematischer Draufsicht auf und/oder Durchsicht durch die in Figur 2 dargestellte Überdachung,
- Figur 4: eine mit Hilfe des Fahrzeuganhängers gebildete Kühlnebelstation, dargestellt in einer Draufsicht wie in Figur 2,
- Figur 5: eine schematische Seitenansicht der Kühlnebelstation aus Figur 4,
- die Figuren 6A und 6B: zwei benachbarte Seitenabsperrungen der Kühlnebelstation aus Figur 4 und 5 in Seitenansicht und Draufsicht.
- die Figuren 7A und 7B: eine exemplarische Ausführungsform hinsichtlich der Seitenabsperrungen und/oder einer daraus gebildeten Seiten- und/oder Umfangswandung für die Kühlnebelstation,
- Figur 8: eine perspektive Innenansicht einer exemplarischen Ausführungsform einer als Kühlzelt ausgebildeten Kühlnebelstation,
- Figur 9: eine schematische Draufsicht auf die als Kühlzelt ausgebildete Kühlnebelstation aus Figur 8,
- die Figuren 9A bis 9D: mehrere zu Figur 9 alternative Varianten hinsichtlich der Grundfläche der Kühlnebelstation bzw. des Kühlzelts und
- Figur 10: eine schematische Seitenansicht der exemplarischen Ausführungsform der als Kühlzelt ausgebildeten Kühlnebelstation gemäß Figur 8 und 9.

Die nachstehend mit Bezug auf die Figuren beschrieben Merkmale können sowohl einzeln als auch in beliebiger Kombination miteinander realisiert sein; ferner auch in Kombination mit den vorgenannt bereits beschriebenen Merkmalen oder Merkmalskombinationen.

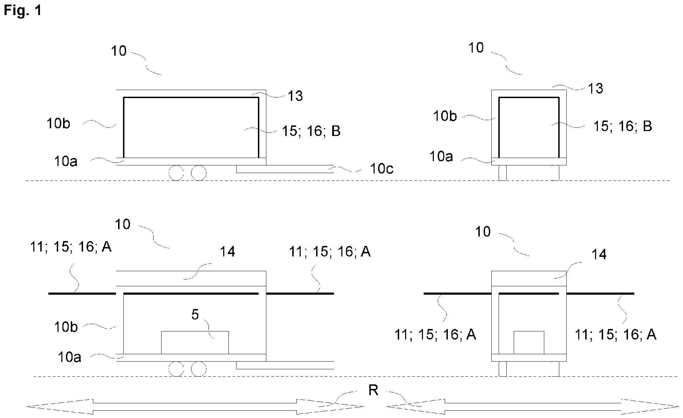

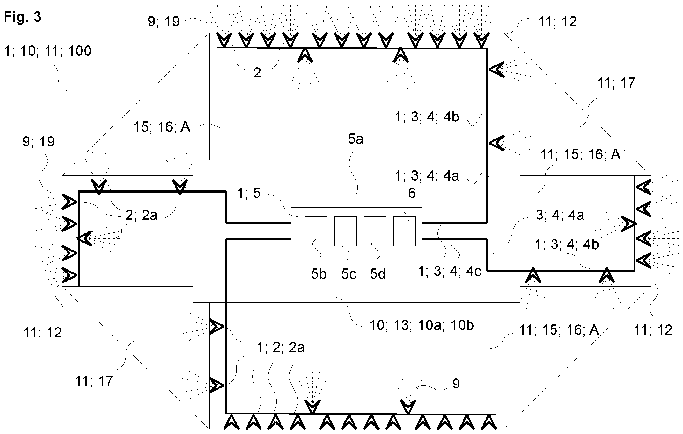

Figur 1 zeigt rein schematisch den hier vorgeschlagenen Fahrzeuganhänger 10 in zwei verschiedenen Ansichten von der Seite (linke Teilfiguren) und von hinten (rechte Teilfiguren). Der Fahrzeuganhänger 10 ist mit einer integrierten Kühlvorrichtung 1 ausgestattet, die in einer exemplarischen Ausführungsform weiter unten mit Bezug auf Figur 3 beschrieben ist. Der Fahrzeuganhänger 10 umfasst ein durch ein Kraftfahrzeug mitführbares Anhänger-Fahrgestell 10a mit einer Anhängerkupplung 10c, beispielsweise mit einer marktüblichen und abschließbaren Kugelkopf-Kupplung, sowie einen Anhängeraufbau 10b z.B. aus glasfaserverstärktem Kunststoff (GFK-Aufbau).

Der Fahrzeuganhänger 10 umfasst ferner die integrierte Kühlvorrichtung 1 (Figur 3) zur Kühlung eines Aufenthaltsbereichs R für Personen, wobei die Kühlvorrichtung 1 einen den Fahrzeuganhänger 10 und/oder einen daran angrenzenden Umgebungsbereich S umfassenden, gekühlten Aufenthaltsbereich R für Personen bereitstellt, indem sie durch Wasserzerstäubung einen wasserhaltigen Kühlnebel 9 (Figur 3) erzeugt und in den Aufenthaltsbereich R abgibt.

Vorzugsweise umfasst der Fahrzeuganhänger 10 eine zumindest vorübergehend einrichtbare Überdachung 11 zum Überdachen des Aufenthaltsbereichs R in oder auf dem Fahrzeuganhänger 10 und/oder in einem angrenzenden Umgebungsbereich S, wobei die Kühlvorrichtung 1 den wasserhaltigen Kühlnebel 9 von der Überdachung 11 aus in den Aufenthaltsbereich R abgibt. Der Aufenthaltsbereich R ist in Figur 1 in den unteren beiden Teilfiguren angedeutet; er kann beispielsweise die Grundfläche der Überdachung 11, genauer gesagt die von der Überdachung insgesamt überdachte Grund- oder Bodenfläche unter dem Fahrzeuganhänger 10 und/oder um den Fahrzeuganhänger 10 herum umfassen. Mit der Grund- oder Bodenfläche unter dem Fahrzeuganhänger 10 ist in diesem Zusammenhang diejenige Grund- oder Bodenfläche gemeint, die der Fahrzeuganhänger 10 in seiner Transportposition bzw. bei Nichtgebrauch der integrierten Kühlstation 2 - und somit mit seinen Wandelementen 15 in der Position B - einnimmt.

Durch die z.B. gemäß der Ausführungsform aus Figur 3 ausgebildete Kühlvorrichtung 1 wird ein in dem Aufenthaltsbereich R befindliches Luftvolumen von oben her mit eingesprühtem wasserhaltigen Kühlnebel 9 angereichert und/oder gesättigt. Dabei kann die Kühlvorrichtung 1 insbesondere durch Versprühen eines wasserhaltigen Kühlnebels 9 von einem Außenrand 12 (Figur 3) der Überdachung 11 aus eine herabrieselnde Kühlnebelwand 19 erzeugen, die ein in dem Aufenthaltsbereich R befindliches Luftvolumen abkühlt. Die Kühlvorrichtung 1 erzeugt den wasserhaltigen Kühlnebel 9 mit Hilfe einer Düsenanordnung 2a von Kühlnebeldüsen 2, an die sie unter Überdruck stehendes Wasser zum Zerstäuben heranführt und von denen aus sie den Kühlnebel 9 erzeugt und an die Luft abgibt.

Wie in Figur 1 zu erkennen ist, kann der Fahrzeuganhänger 10 eine Anzahl von beispielsweise ein, zwei, drei oder vier Wandelementen 15 aufweisen, die
- in einer in Überkopfhöhe befindlichen ersten Position A (untere zwei Teilfiguren in Figur 1), in der sie den Aufenthaltsbereich R und/oder Umgebungsbereich S überdachen, und/oder
- in einer zweiten Position B (obere zwei Teilfiguren in Figur 1), in der sie bei Nichtgebrauch der integrierten Kühlvorrichtung 1 den Fahrzeuganhänger 10 als Seitenwände 16 verschließen und/oder sichern,
positionierbar und/oder montierbar sind.

Die Wandelemente 15 können dauerhaft oder zumindest dann, wenn sie sich in der ersten Position A befinden, an oder nahe einer zum Außenrand 12 der Überdachung 11 gehörigen Kante mit jeweiligen Druckleitungsabschnitten 4 (Figur 3) und/oder Kühlnebeldüsen 2 versehen sein. Die Wandelemente 15 sind beispielsweise verstellbare, verschwenkbare und oder anderweitig umpositionierbare Seitenwände 16, die hydraulisch, pneumatisch, elektrisch oder etwa mittels einer Kurbel von Hand in die erste Position A gebracht und/oder darin fixiert werden können. Mittels der in der ersten Position A befindlichen Wandelemente 15; 16 und vorzugsweise auch mit Hilfe zusätzlicher Eckbereichsüberdachungen 17 stellt der Fahrzeuganhänger 10 eine Überdachung 11 bereit, die einen Aufenthaltsbereich R für Personen überdacht und/oder definiert. Der Aufenthaltsbereich R kann insbesondere einen die Grundfläche des transportbereiten Anhängers 10 umgebenden Bodenflächenbereich, d.h. einen Umgebungsbereich S mit umfassen; weiterhin vorzugsweise auch einen die Überdachung selbst nochmals umgebenden Außenbereich, der - je nach Sprührichtung und/oder Reichweite der zur erfindungsgemäßen Kühlvorrichtung 1 gehörigen Kühlnebeldüsen 2 - durch die Kühlvorrichtung 1 des Fahrzeuganhängers 10 kühlbar ist. Somit kann der eingangs definierte Aufenthaltsbereich R auch noch einen Außenbereich mit umfassen, insbesondere einen Außenbereich, der durch den Einflussbereich der Kühlnebeldüsen 2, d.h. durch den Einzugs- oder Erstreckungsbereich des von ihnen abgegebenen Kühlnebels 9 liegt.

Wenn die Kühlnebeldüsen 2 beispielsweise an der Überdachung 11 und/oder an einem Außenrand 12 der Überdachung 11 angeordnet sind, kann der hierdurch gekühlte Aufenthaltsbereich R auch noch den außerhalb dieser Überdachung 11, d.h. außerhalb des überdachten Umgebungsbereichs S gelegenen Außenbereich mit umfassen, der sich durch den Einflussbereich der Kühlnebeldüsen 2 und damit durch den Einzugs- oder Erstreckungsbereich des erzeugten Kühlnebels 9 ergibt.

Der Fahrzeuganhänger 10 ist z.B. ein Kofferanhänger, der im Transportzustand von einem Kraftfahrzeug mitführbar ist und auf jedem Pkw-Parkplatz abstellbar ist; im geschlossenen Zustand (mit den Wandelementen 15 in der Position B, wie in den oberen Teilfiguren der Figur 1 erkennbar) hat er beispielsweise eine Länge von 4,2 Metern, eine Breite von 2,2 Metern und/oder eine Höhe von 2,9 Metern. Der Fahrzeuganhänger 10 mit der Gesamthöhe von 2,9 Metern kann auf seinem Anhängerfahrgestell 10a beispielsweise einen (im Transportzustand kofferförmigen) Anhängeraufbau 10b mit einer Höhe von 2,3 Metern aufweisen.

Die vier Seitenwände 16 können horizontal geteilt bzw. mehrteilig sein; die untere Teile können als verstellbare, insbesondere hydraulisch hochschwenkbare Seitenwände 16, d.h. als Wandelemente 15 für die Überdachung 11 genutzt werden. Obere Teile der Seitenwände können hingegen als Flachkonsolen 14 oberhalb davon, etwa als aufrichtbare und ggfs. auch auswechselbare Werbetafeln genutzt werden; diese können z.B. aus Alu-Dibond bestehen und sich oberhalb des eigentlichen Anhängerdachs 13 erstrecken.

Das Anhängerdach 13, die Flachkonsolen 14 und/oder sonstige Bereiche der Überdachung 11 können kranbar, insbesondere als Kran-Anlenkungspunkte ausgebildet sein oder solche Kran-Anlenkungspunkte zumindest umfassen, wodurch der gesamte Fahrzeuganhänger 10 - vorzugsweise an vier Außenecken seiner Dachfläche 13 - von einem Kran gehoben werden kann. Diese Kran-Anlenkungspunkte erhalten somit eine Zusatzfunktion und werden statisch vorzugsweise so stabil ausgebildet, dass sie nicht nur den Anbau der Überdachung 11, d.h. der erweiterte Dachkonstruktion ermöglichen, sondern ein Hochheben des Anhängers 10 - ggfs. einschließlich der Überdachung 11, etwa wenn diese an einem Aufstellungsort geringfügig versetzt werden müssen.

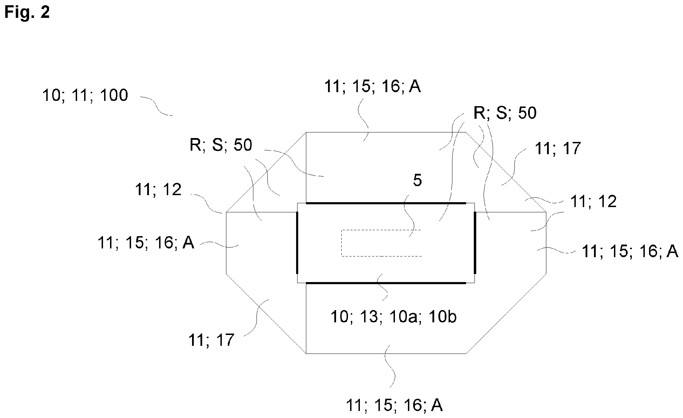

Die Überdachung 11, die sich mit Hilfe der in der ersten Position A positionierten Wandelemente 15 des Fahrzeuganhängers 10 ergibt, ist in Figur 2 in schematischer Draufsicht dargestellt. Wenn sich die Wandelemente 15 bzw. die Seitenwände 16 in der ersten Position A befinden, erreicht der Fahrzeuganhänger 10 im entfalteten, d.h. stationären Zustand ein Aufbaumaß beispielsweise mit einer Länge von 8,2 Metern, einer Breite von 6,2 Metern und/oder einer Höhe von 2,9 Metern.

Sofern die Überdachung 11 außer den Wandelementen 15 noch die Eckbereichsüberdachungen 17 umfasst, kann sich wie dargestellt ein achteckiger Grundriss der Überdachung 11 bzw. ihres Außenrandes 12 ergeben; die Form und die Grundfläche der Überdachung können aber auch anders gewählt sein. Die in Figur 2 (sowie 3 und 4) dargestellte Überdachung 11 besitzt beispielsweise Abmessungen von 8,2 mal 6,2 Metern; entsprechend einer überdachten Nutzfläche von bis zu 50,84 Quadratmetern. Die Eckbereichsüberdachungen 17 können z.B. PVC- oder sonstige Folien, insbesondere Kunststofffolien sein, die zwischen benachbarten Wandelementen 15 aufspannbar sind, um die Fläche des überdachten Aufenthaltsbereichs R bzw. des Umgebungsbereichs S, der mit Hilfe der erfindungsgemäß vorgesehenen Kühlvorrichtung 1 kühlbar ist, auch in Diagonalrichtung zu vergrößern. Die überdachte Nutzfläche von 50,84 Quadratmetern kann umlaufend, d.h. in alle seitlichen Richtungen um 3 Meter erweitert werden und dadurch auf eine Nutzfläche von insgesamt 174 Quadratmetern erweitert werden.

Figur 3 zeigt eine schematische Draufsicht auf und/oder durch die in Figur 2 dargestellte Überdachung 11 gemäß einer lediglich exemplarischen Ausführungsform. Die Kühlvorrichtung 1 umfasst eine schon in den Figuren 1 und 2 angedeutete Druckwasserquelle 5, die beispielsweise einen Wasseranschluss 5a zum Anschließen an einen Hydranten, an einen Wasserschlauch oder an eine externe Wasserzuleitung, einen Wassertank 5c, eine Anlage 5b zur Wassergewinnung beispielsweise durch Umkehrosmose, eine Wasserpumpe 6 und/oder eine Entkeimungs- und/oder Filteranlage 5d zur Verbesserung der Wasserqualität umfassen kann. Der Wasseranschluss 5a, der Wassertank 5c, die Anlage 5b zur Wassergewinnung, die und/oder die Entkeimungs- und/oder Filteranlage 5d und die Wasserpumpe 6 sind fluidtechnisch miteinander verbunden, beispielsweise über eine oder mehrere Wasserleitungen. Ferner kann eine Steuervorrichtung zur Steuerung der Kühlvorrichtung 1 von der Druckwasserquelle 5 und/oder der Kühlvorrichtung 1 mit umfasst sein.

Die Wasserpumpe 6 ist z.B. eine Hochdruckpumpe, die einen Wasserdruck oberhalb von 30 bar, vorzugsweise oberhalb von 50 bar erzeugt. Der Arbeitsdruck während des Kühlens des Aufenthaltsbereichs R kann beispielsweise zwischen 60 und 100 bar, vorzugsweise zwischen 70 und 80 bar betragen. Die Wasserpumpe 6 kann eine Reihenkolbenpumpe aus Keramik sein, und darin und/oder an den daran angeschlossenen Druckleitungen 3 und/oder Kühlnebeldüsen 2 können Kevlardichtungen vorgesehen sein. Der Druck, den die Wasserpumpe 6 bzw. die Druckwasserquelle 5 bereitstellt, kann zwischen einem Maximaldruck (die z.B. zwischen 70 und 100 bar betragen kann) stufenlos einstellbar sein. Beim Kühlen kann beispielsweise ein Arbeitsdruck von 60 bis 80 bar gewählt werden.

Von der Hochdruck- bzw. Wasserpumpe 6 ausgehend verlaufen ein oder mehrere Druckleitungen 3, etwa wie dargestellt je Seitenwand 16 bzw. Wandelement 15 eine separate Druckleitung 3. Verschiedene Druckleitungsabschnitte 4; 4a; 4b; 4c können beispielsweise
- entlang von Dachträgern bzw. Dachstützen, die an den vier Außenecken des Anhängeraufbaus 10b vorgesehen sind, bis in Höhe der Überdachung 11 oder zumindest bis in Überkopfhöhe verlaufen (erste Druckleitungsabschnitte 4a),
- von dort aus (d.h. in Höhe der Überdachung 11 bzw. in Überkopfhöhe) entlang der in der ersten Position A befindlichen Wandelemente 15 weiterlaufen (zweite Druckleitungsabschnitte 4b) und/oder
- von der Druckwasserquelle 5 aus hin zu den vier Dachstützen verlaufen (weitere Druckleitungsabschnitte 4c),
wobei dieser Druckleitungsverlauf nur exemplarisch ist und je nach Anzahl und Anordnung hochlaufender Dachstützen auch anders wählbar ist.

Die Kühlvorrichtung 1 umfasst somit eine Anzahl von Druckleitungen 3, die jeweils mit einer oder mehreren Kühlnebeldüsen 2 versehen sind. Die gesamte Düsenanordnung 2a kann beispielsweise, wie in Figur 3 dargestellt, 38 Kühlnebeldüsen oder jede sonstige Anzahl umfassen. Die Kühlnebeldüsen 2 können Bohrungen mit einem Durchmesse von etwa 0,1 bis 0,3 Millimetern, beispielsweise von 0,15 Millimetern Durchmesser besitzen, durch die hindurch das Wasser gepreßt wird; etwa mit einem Sprühwinkel zwischen 20° und 70°, vorzugsweise zwischen 30° und 60°; beispielsweise von 45°. Pro Düse kann der Wasserdurchlass zwischen einem und 10 Litern pro Stunde, insbesondere beispielsweise 2 bis 4 Liter pro Stunde betragen. Die gesamte Düsenanordnung 2a ist beispielswise so ausgelegt, dass sie bei Volllast einen Wasserverbrauch von zwischen 50 und 300 Litern, beispielsweise von 100 bis 150 Litern pro Stunde besitzt. Mit der Düsenanordnung 2a insgesamt ist beispielsweise eine adiabatische Kühlleistung zwischen 50 und 100 kW pro Stunde erreichbar. Sofern keine externe Wasserquelle am Aufstellungsort des Fahrzeuganhängers 10 bereitsteht, kann eine Umkehrosmose-Anlage oder eine sonstige Anlage 5b zur Wassergewinnung vorgesehen sein. Ferner kann eine Entkeimungsanlage 5c vorgesehen sein; damit ist beispielsweise eine 99,9-prozentige Keimfreiheit erreichbar.

Der Wasseranschluss 4a und/oder ein Stromanschluss (nicht dargestellt) können an der Druckwasserquelle 5, aber alternativ oder zusätzlich auch an der Deichsel des Anhängerfahrgestells 10a angeordnet bzw. verbaut sein und dort etwa gemäß der Schutzstandard IP 65 geschützt sein. Auch die Druckwasserquelle 5 insgesamt kann auf dem Anhängeraufbau 10b angeordnet, beispielsweise in Bodennähe nahe des Anhängerfahrgestells 10a verbaut sein (z.B. wie dargestellt in Form eines Mittelblocks) und gemäß dem Schutzstandard IP 65 gestaltet sein. Abgesehen von seiner Kühlfunktion ist der Mittelblock bzw. die Druckwasserquelle 5 auch als Ablagefläche für auszustellende, zu verkaufende oder sonstige Waren oder für sonstige Zwecke nutzbar. Der Mittelblock bzw. die Druckwasserquelle 5 kann abschließbar und/oder schallisoliert sein. Der Mittelblock bzw. die Druckwasserquelle 5 und/oder die Bodenfläche des Fahrzeuganhängers 10 können mit Anti-Rutsch-Oberflächen versehen sein; sie können ferner mit versenkten Verzurrösen zum Festzurren von Stühlen, Sitzbänken, oder sonstigen Sitzgelegenheiten 21, von Seitenabsperrungen 20 oder von sonstiger Ladung, etwa von Verkaufs- oder Ausstellungsware versehen sein. Um den Fahrzeuganhänger 10 bzw. dessen Anhängeraufbau 10b herum kann dank der Überdachung 11 ein gekühlter Aufenthaltsbereich R bereitgestellt werden, der ca. 28 sitzenden Personen Platz bietet.

Wie in Figur 3 zu erkennen ist, kann durch die Anordnung der Hochdruckventile, d.h. der Kühlnebeldüsen 2 eine umlaufende Kühlnebelwand 19 erzeugt werden, wodurch das Luftvolumen in dem überdachten Aufenthaltsbereich noch wirkungsvoller gekühlt wird. Die Düsenanordnung 2a kann somit entlang des Außenrandes 12 der Überdachung 11 angeordnete Düsen 2, insbesondere entlang zugehöriger Kanten der Wandelemente 15 und/oder Kanten der Eckbereichsüberdachungen 17 umfassen. Die Düsenanordnung 2a kann ferner Düsen 2 umfassen, die entlang sonstiger Kanten, beispielsweise entlang von Seitenkanten der Wandelemente 15 verlaufen und zur deren Außenkanten bzw. dem Außenrand 12 der Überdachung 11 hinführen. Einige der Kühlnebeldüsen 2 können auch nach innen, d.h. in Richtung der Grundfläche des Fahrzeuganhägers 10 bzw. seines Transportmaßes geneigt sein.

Die Kühlnebeldüsen sind schwerpunktweise an einem Außenrand 12 der Überdachung 11 angeordnet und/oder dort schwerpunktweise in Richtung des Erdbodens, d.h. vertikal nach unten, oder alternativ schräg nach außen geneigt, um die Grundfläche des gekühlten Aufenthaltsbereichs R noch weiter zu vergrößern. In dem Aufenthaltsbereich R, insbesondere in dem Umgebungsbereich S können sich Passanten oder sonstige Personen durch den verbreiteten Kühlnebel 9 abkühlen bzw. entspannen, etwa an heißen Sommertagen.

Alle Kühlnebeldüsen 2 oder zumindest die meisten Kühlnebeldüsen 2 der Düsenanordnung 2a sind vorzugsweise in Überkopfhöhe, insbesondere an oder nahe unterhalb der Überdachung 11 angeordnet, von wo aus der erzeugte Kühlnebel 9 auf die Personen im Aufenthaltsbereich R herabrieselt. Die Kühlvorrichtung 1 kann statt manuell auch automatisch anlaufen, etwa sobald eine Umgebungs- oder Außentemperatur einen vorbestimmten und/oder programmierten Grenzwert überschreitet.

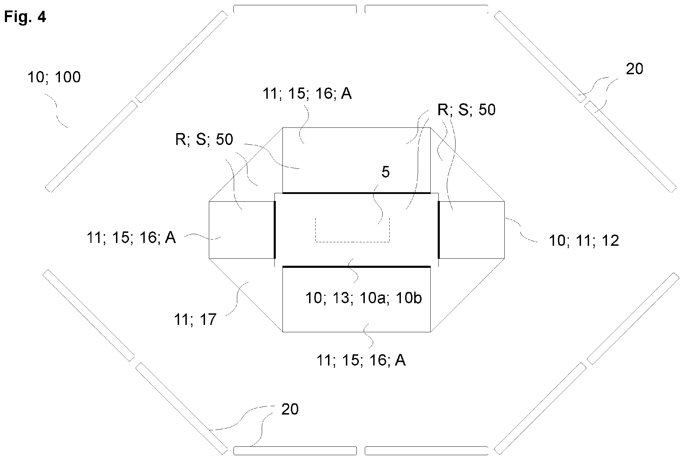

Figur 4 zeigt eine mit Hilfe des Fahrzeuganhängers 10 gebildete Kühlnebelstation 100, dargestellt in einer Draufsicht entsprechend der Figur 2. Über die überdachte Grundfläche mit den Abmessungen von 8,2 mal 6,2 Metern, die einer überdachten Nutzfläche von 50,84 Quadratmetern entspricht, wurden mehrere Seitenabsperrungen 20 so angeordnet, dass sie mit jeweils einer Seitenfläche relativ frontal dem Fahrzeuganhänger 10 bzw. dem Mittelpunkt der damit gebildeten Kühlnebelstation 100 zugewandt sind. Sie dienen dazu, die von der Kühlnebelstation 100 erzeugte Kühltemperatur noch weitergehend gegen eine höhere Umgebungstemperatur abzuschirmen, insbesondere in Bodennähe. Durch die Seitenabsperrungen 20 wird die als gekühlter Aufenthaltsbereich nutzbare Fläche auf insgesamt 174 Quadratmeter erweitert.

Außer den Seitenabsperrungen 20 bzw. den Bauzaunelementen können auch speziell auf einen reduzierten Wärmetransport hin optimierte Seitenabsperrungen 20 bzw. Thermobanden vorgesehen sein, etwa solche mit durchgehenden Kunststofffolien aus Materialen und/oder Materialschichtenfolgen mit besonders geringer Wärmeleitung. Insbesondere können wärmedämmende Materialien, insbesondere in Form von Textilien vorgesehen sein und beispielsweise rahmenförmige umgebene Flächen der Seitenabsperrungen 20 überspannen.

Die Seitenabsperrungen 20 können beispielseweise ein Stahlgestell umfassen, das einseitig oder vorzugsweise beidseitig mit einer Thermoplane, d.h. einer wärmeisolierenden Kunststoffplane bespannt und/oder überspannt ist, und zwar vorzugsweise flächendeckend, d.h. vollflächig, und/oder nach unten bis zum Erdboden.

Auch jeweilige Verbindungen zwischen zwei aufeinanderfolgenden Seitenabsperrungen 20 können ein- oder beidseitig durch entsprechende wärmeisolierende Kunststoffplanen abgedeckt sein., um auch dort ein Hindurchströmen von Luft zu verhindern.

Durch die Vielzahl miteinander wärmeisolierend verbundener und selbst jeweils wärmeisolierender Seitenabsperrungen wird eine den gekühlten Aufenthaltsbereich wirksam erweiternde umlaufende Thermobande bzw. thermische Isolationswand bereitgestellt.

Da der durch die Kühlnebeldüsen 2 verbreitete Kühlhebel 9 auch noch in einem Abstand von einigen Metern zu spüren ist, können die Anordnung und der Abstand, insbesondere der seitliche Abstand der Seitenabsperrungen 20 von der Überdachung 11 so gewählt werden, dass alle innerhalb der Seitenabsperrungen 20 befindlichen Personen noch einen ausreichenden Kühleffekt spüren. Gemäß Figur 4 können z.B. zwölf Seitenabsperrungen 20 verwendet werden, die an zwei Enden der Kühlnebelstation 100 zum Betreten bzw. Verlassen der Kühlnebelstation 100 zwei Ein- und Ausgänge bzw. Notausgänge begrenzen. Werden die Seitenabsperrungen 20 beispielsweise in einem seitlichen Abstand von drei Metern von der Überdachung 11 aufgestellt, so erhöht sich die nutzbare Fläche des gekühlten Aufenthaltsbereichs R auf eine Gesamtfläche von 14,2 x 12,2 Metern, d.h. auf 174 Quadratmeter.

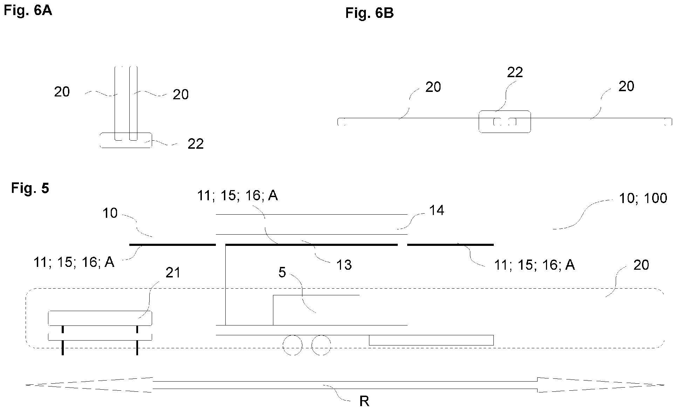

Figur 5 zeigt eine schematische Seitenansicht der Kühlnebelstation 100 gemäß Figur 4, wobei die Anordnung von Seitenabsperrungen 20, d.h. die aus ihnen aufgebauten Absperrbanden lediglich schematisch dargestellt ist (gestrichelte Linie).

Je zwei benachbarte Seitenabsperrungen 20 können, wie in Figur 6A schematisch in Draufsicht dargestellt, mit ihren zugewandten Enden, insbesondere endseitigen Stellfüßen 22 in ein Trägergestell eingestellt werden, hierzu zeigt Figur 6B noch eine Draufsicht von oben, in der beide benachbarten Seitenabsperrungen 20 vollständig dargestellt sind.

Innerhalb der durch die Seitenabsperrungen 20 abgegrenzten Kühlnebelstation 100 können, wie in Figur 5 dargestellt ist, Stühle, Sitzbänke oder sonstige Sitzgelegenheiten 21 bzw. Sitzmöbel aufgestellt werden.

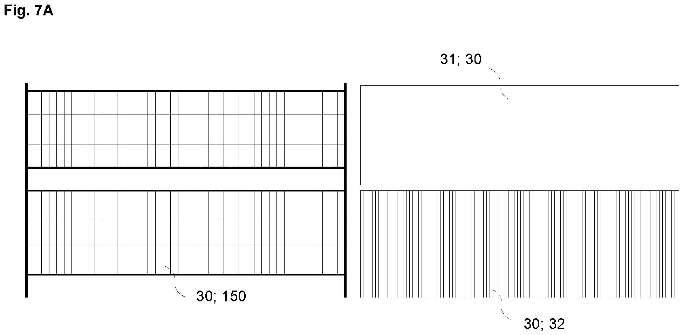

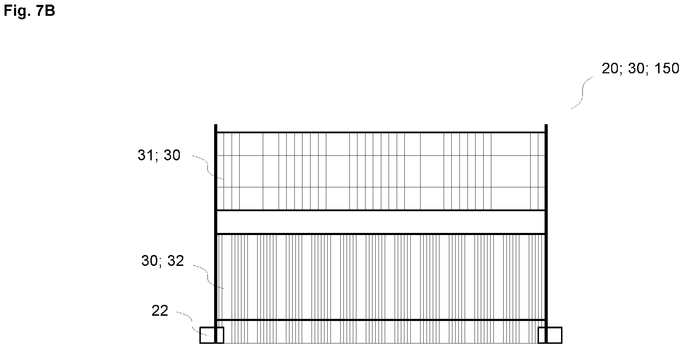

Die Figuren 7A und 7B zeigen eine exemplarische Ausführungsform hinsichtlich der Seitenabsperrungen 20 und/oder einer daraus gebildeten Seiten- und/oder Umfangswandung 150 für die Kühlnebelstation 100.

Als tragende und/oder stabilisierende Elemente für die Seitenabsperrungen bzw. für die Seiten- und/oder Umfangswandung können gemäß Figur 7A, 7B beispielsweise Bauzäune 30 verwendet werden. Diese lassen sich mittels Stellfüßen 22 oder sonstigen Halterungen gegen Umfallen sichern. Für die erfindungsgemäße Kühlnebelstation genügen Bauzäune allein jedoch nur dann, wenn sie (anders als abgebildet) zumindest weitgehend luft- und insbesondere winddicht sind. Übliche Bauzäune 30 hingegen sind aber zumeist aufstellbare Metallgitter mit großen Öffnungen, die lediglich Personen den Zutritt verwehren.

Daher umfasst die Seitenabsperrung 20 bzw. die Seiten- und/oder Umfangswandung 150 zusätzlich noch Seitenflächenelemente 31, 32, also flächige Elemente entweder nur mit kleinen Öffnungen oder ganz ohne Öffnungen - wie im Falle z.B. einer Kunststoffplane oder eines hinreichend kühlnebeldichten bzw. winddichten Gewebes aus Kunststoff- oder beliebigen sonstigen Fasern.

Beispielsweise kann, wie in Figur 7A rechts neben dem Bauzaun 30 dargestellt, für einen oberen Bereich der Seitenabsperrung 20 bzw. der Seiten- und/oder Umfangswandung 150 - also hier für einen unteren Bereich des Bauzauns 30 - ein erstes Seitenflächenelement 31 vorgesehen sein, welches vorzugsweise zwar kühlnebeldicht bzw. winddicht, aber durchsichtig, also transparent oder zumindest teiltransparent und/oder zumindest durchscheinend ist und als Fensterbereich bzw. Lichteinlass nutzbar ist (vorzugsweise sind auch Dachflächenelemente so ausgebildet). Für das erste Seitenflächenelement 31 kann etwa eine durchsichtige Plane oder ein in diesem Sinne durchsichtiges Gewebe verwendet werden.

Ferner kann, wie in Figur 7A ebenfalls dargestellt, für einen unteren Bereich des Bauzauns 30 (bzw. der Seitenabsperrung 20 oder der Seiten- und/oder Umfangswandung 150) ein zweites Seitenflächenelement 32 vorgesehen sein, das ebenfalls kühlnebeldicht bzw. winddicht, aber beispielsweise undurchsichtig ist. Für das zweite Seitenflächenelement 32 kann etwa eine undurchsichtige Plane oder undurchsichtiges Gewebe verwendet werden.

Figur 7B zeigt den mit beiden Seitenflächenelementen 31, 32 versehenen Bauzaun 30, eingestellt in zwei Stellfüße 22. Natürlich kann anstelle zweier verschiedener Seitenflächenelemente 31, 32 auch ein einziges Seitenflächenelement vorgesehen sein, das die gesamte Fläche und insbesondere Höhenabmessung des Bauzauns 30 bedeckt; entweder einseitig oder zweiseitig.

Das in Figur 7A nicht eigens sichtbare erste, obere Seitenflächenelement 31 reicht bis an das zweite, untere Seitenflächenelement 32 heran und bis auch bis an einen oberen Rand des Bauzauns 30.

Die beiden Seitenflächenelemente 31, 32 können wahlweise mit ihren Außenrändern an entsprechenden Streben bzw. Gitterstäben des Bauzauns 30 befestigt sein oder um deren (vertikale und/ider horizontale) Außenstreben umgewickelt sein. Das untere Seitenflächenelement 32 ist vorzugsweise nicht lediglich um das erhöhte, untere Ende bzw. die unterste Querstrebe des Bauzauns gewickelt oder daran befestigt, sondern erstreckt sich noch weiter nach unten bis zum Boden bzw. Untergrund und somit bis zu den unteren Enden der beiden äußersten seitlichen Stützstreben, auf denen das Bauzaunelement 30 steht.

Wenn mehrere Bauzäune zusammengestellt sind, um die Seiten- und/oder Umfangswandung 150 zu bilden, sind die Bauzäune 30 in Stellfüße 22 eingestellt. Daher kann das untere Seitenflächenelement 32 zumindest an bzw. neben den Stellfüßen 22 eine Aussparung aufweisen, ohne die Kühlnebel- bzw. Winddichtigkeit zu gefährden. Zwischen je zwei Stellfüßen 22 jedoch reicht das untere (oder alternativ einzige) Seitenflächenelement 32 vorzugsweise ganz bis zum Boden bzw. Untergrund. Dadurch bildet sich in dem gekühlten Aufenthaltsbereich, d.h. in dem Habitat für den Kühlnebel eine dichte und atmosphärisch isolierte Wanne für den Kühlnebel, der insbesondere in Bodennähe nirgends entweichen kann und seine Kühlwirkung somit unvermindert entfaltet.

Wenn aus den Bauzäunen 30 die Seiten- und/oder Umfangswandung 150 für die Kühlnebelstation 100 bzw. für das Kühlzelt 200 gebaut wird, werden vorzugsweise auch die seitlichen Zwischenräume zwischen seitlich einander benachbarten Bauzäunen 30 mit geeigneten Abdichtungen, insbesondere mit weiteren Seitenflächenelementen ausgekleidet (nicht dargestellt); beispielsweise durch Gummiverbindungen bzw. Gummidichtungen.

Wenn die Seiten- und/oder Umfangswandung 150 insbesondere für eine Kühlnebelstation 100 gedacht ist, die als Kühlzelt 200 gebaut wird, werden vorzugsweise auch etwaige vertikale Zwischenräume zwischen einem oberen Rand der Seiten- und/oder Umfangswandung 150 und einer Überdachung 11 (hier also z.B. dem oberen Rand der Bauzäune 30) mit geeigneten Abdichtungen, insbesondere weiteren Seitenflächenelementen ausgekleidet (nicht dargestellt). Dadurch ist insbesondere die Außenhaut eines Kühlzelts 200 am Übergang zwischen Umfangswandung 150 und Überdachung 11 kühlnebel- bzw. winddicht und somit zum räumlichen Einschließen und Festhalten des Kühlnebels geeignet.

Alternativ können die Zwischenräume zwischen den Bauzäunen, der Überdachung und/oder dem Boden auch mit Klettband, mit Flauschmaterialien oder sonstigen Dichtmitteln abgedichtet werden. Ferner können die Zwischenräume zwischen den Bauzäunen, der Überdachung und/oder dem Boden alternativ auch durch Gummi-Lippen oder sonstigen Gummi-Verbindungselementen abgedichtet werden bzw. abgedichtet sein. Zu deren Anbringung können Streben der Bauzäune 30, aber ebenso auch Dachstreben der Überdachung (s.u.) mit Kederprofilen ausgestattet sein. Gummi- oder sonstige Dichtungs- oder Verbindungselemente können auch gezielt verwendet werden, um Windlasten aufzunehmen und gewisse begrenzte Verformungen des Kühlzelts unter dem Einfluss von Wind zu erlauben.

Soweit bei beliebigen Ausführungsformen ein begrenzter Luftaustausch bzw. Durchzug erwünscht ist, ist vorzugsweise vorgesehen, dass dieser Luftaustausch überwiegend durch das Material von Flächenelementen der Außenhaut der Kühlnebelstation 100 bzw. des Kühlzelts 200 hindurch erfolgt und dass dieser Luftaustausch durch dieses Material oder diese Materialien hindurch größer ist als der Luftaustausch, der durch Türen, Zwischenräume zwischen Bauzäunen, der Überdachung und/oder dem Boden erfolgt.

Die Bauzäune 30 können z.B. eine Höhe zwischen 1,2 und 2,4 Metern und eine Breite von 1,0 bis 4,5 Metern, z.B. von 3,5 Metern besitzen; einige der verwendeten Bauzäune 30 können zudem bereits einen Türrahmen bilden oder enthalten und dadurch einen vorzugsweise abschließbaren Personeneingang enthalten.

Für die Seitenflächenelemente 31, 32, deren Grenze z.B. in einer Höhe von 1,2 bis 1,5 Metern über dem Boden liegen kann, sind beispielsweise Textilien, etwa Gewebe, oder ansonsten Planen geeignet, aber auch starre Platten geeignet. Für das obere Seitenflächenelement 31 kann z.B. ein semitransparentes Netzgewebe verwendet werden; etwa ein solches, dass UV-absorbierend ist und vorzugsweise über 80 Prozent der UV-Strahlung absorbiert, aber für das menschliche Auge durchsichtig bzw. hinreichend durchscheinend ist.

Dieselben Materialen wie für die Seitenflächenelemente 31, 32 sind auch für Dachflächenelemente 33 der Überdachung 11 verwendbar, jedenfalls soweit die Überdachung 11 nicht schon durch die hochgeschwenkten Seitenwände 15 des Fahrzeuganhängers 10 gebildet wird.

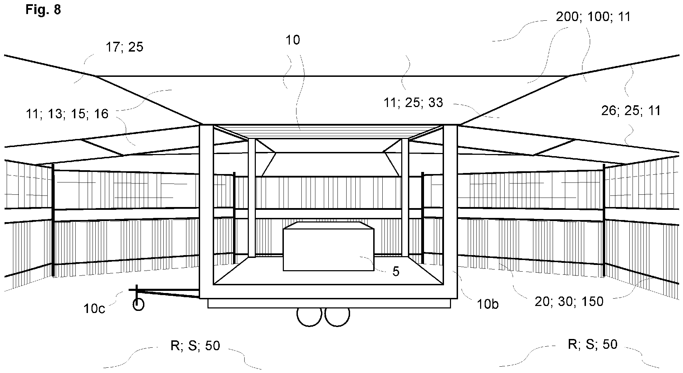

Figur 8 zeigt eine perspektive Innenansicht einer exemplarischen Ausführungsform einer als Kühlzelt 200 ausgebildeten Kühlnebelstation 100. Der Einfachheit halber wurden Details der erfindungsgemäßen Kühlvorrichtung (insbesondere gemäß Figur 3 oder einer beliebigen Abwandlung davon) sowie die Stellfüße nicht mehr eigens dargestellt.

Wie in Figur 8 dargestellt ergibt sich durch die Mehrzahl von Seitenwandelementen, insbesondere Bauzäunen 30 oder sonstigen Seitenabsperrungen 20 die dargestellte Seitenwandung und/oder Umfangswandung 150. Da die Kühlnebelstation 100 als Kühlzelt 200 ausgebildet ist, reicht die Umfangswandung 150 bis an die Überdachung 11 heran. Letztere wird teils durch die hochgeschwenkten (s.o.) Seitenwände 15 des Fahrzeuganhängers 10, teils durch zusätzliche Dachflächenelemente 33 gebildet, die beispielsweise in gleicher Weise wie die Seitenwandelemente 31, 32, d.h. insbesondere wie die Planen, Gewebe oder Textilien ausgebildet, insbesondere aus solchen Materialien gebildet sein können.

Somit bilden die Überdachung 11 und/oder die Umfangswandung 150 gemeinsam die Außenhaut des Kühlzelts 200 zum Einschließen des wasserhaltigen Kühlnebels 9, wobei vorzugsweise
- die Umfangswandung 150 Seitenflächenelemente 31, 32, etwa in Form geschlossener Planen und/oder geschlossener oder zumindest feinporiger Gewebeflächen aufweist und
- die Überdachung 11 zwischen dem Fahrzeuganhänger 10 und der Umfangswandung 150 Dachflächenelemente 33, etwa in Form geschlossener Planen und/oder geschlossener oder zumindest feinporiger Gewebeflächen aufweist.

Aus diesen Dachflächenelementen 33 werden insbesondere Eckbereichsüberdachungen 17 gebildet, vorzugsweise zusätzlich aber auch eine Dacherweiterung 25, die einen noch verbleibenden seitlichen Abstand zwischen den Rändern der Wandelemente 15 bzw. Seitenwände 16 des Fahrzeuganhängers 10 einerseits und der Umfangswandung 150 andererseits überbrücken und insbesondere an oder innerhalb der Umfangswandung 150 aufgespannt sind. Die Dachflächenelemente 33 sind vorzugsweise nicht starr, sondern biegsam und insbesondere als Planen oder Gewebe realisiert.

Vorzugsweise umfasst die Überdachung 11 jedoch auch starre Elemente, insbesondere Dachstreben 26, insbesondere für die Dacherweiterung 25 zwischen den Rändern der Wandelemente 15 bzw. Seitenwände 16 des Fahrzeuganhängers 10 und der Umfangswandung 150.

Wie dargestellt umgibt die Umfangswandung 150 den Anhänger 10 von allen Seiten, sodass man um den Anhänger 10 herumlaufen kann. Somit weist die Kühlnebelstation 100 bzw. das Kühlzelt 200 einen Rundgang 50 auf, der - ebenso wie die begehbare Bodenfläche des Anhängeraufbaus 10b - als Aufenthaltsbereich R nutzbar ist.

Im Aufenthaltsbereich R lassen sich in beliebiger Anordnung Sitzmöbel wie Stühle, Bänke etc. aufstellen, beispielsweise innen entlang der Umfangswandung 150 mit Blickrichtung zum Anhänger 10. Zumindest an einer oder vorzugsweise zwei Stellen entlang des Umfangs der Umfangswandung 150 ist ein Personeneingang ausgebildet (nicht dargestellt).

Die Überdachung 11 kann anstelle der Wandelemente 15 bzw. Seitenwände 16 des Fahrzeuganhängers 10 übrigens auch entsprechende Dachelemente 33, insbesondere Planen, Gewebe oder Textilien wie oben beschrieben aufweisen. In diesem Fall können beispielsweise Dachstreben die Rohre, Rohrleitungen und/oder Kühlnebeldüsen der Kühlvorrichtung tragen und/oder verkörpern.

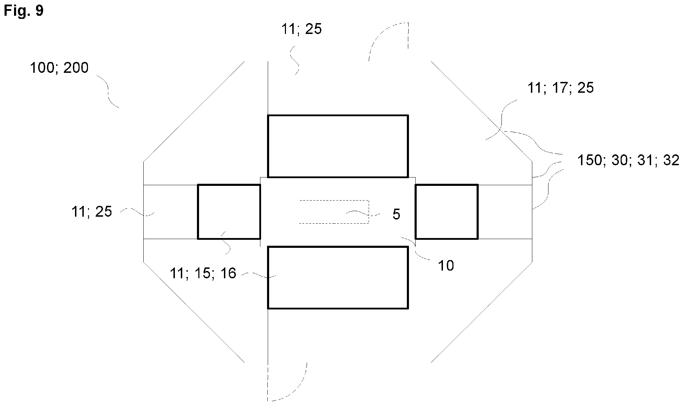

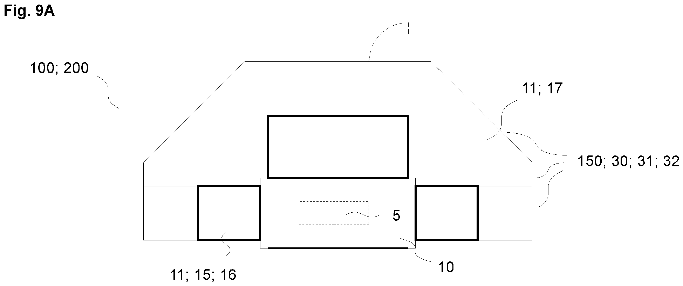

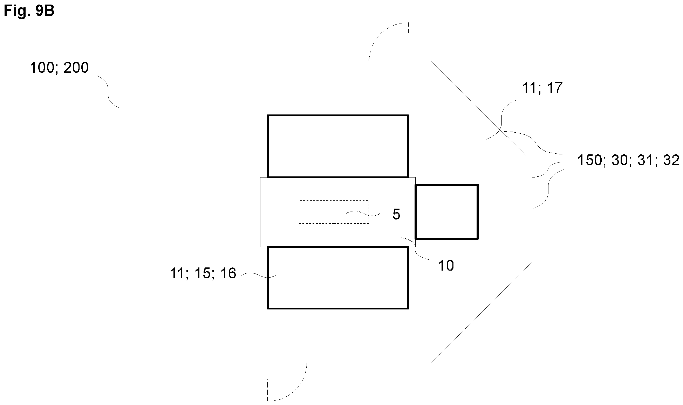

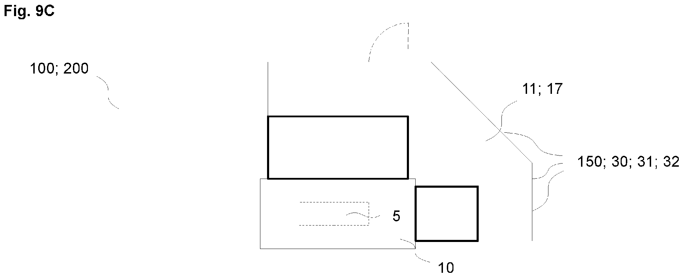

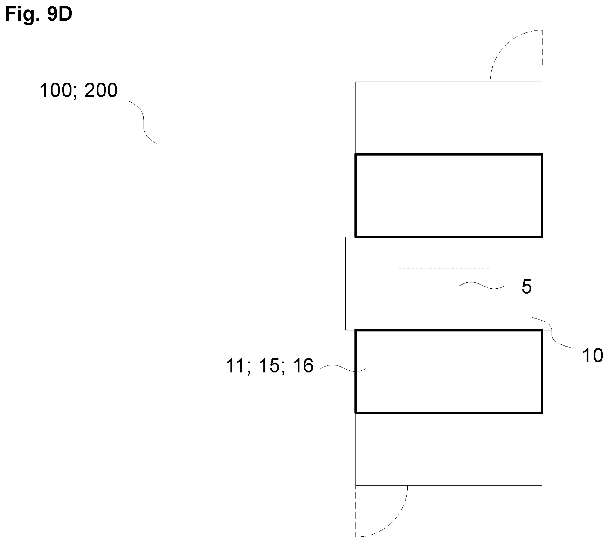

Figur 9 zeigt eine schematische Draufsicht auf die als Kühlzelt ausgebildete Kühlnebelstation aus Figur 8. Exemplarisch sind zwei Türen bzw. Personeneingänge dargestellt. In der Draufsicht kann die Kühlnebelstation 100 bzw. das Kühlzelt 200 insbesondere die Grundrissform eines länglichen Achtecks bzw. eines Rechtecks mit schräg, vorzugsweise im Winkel von 45° schräg verlaufenden Eckwänden ausgebildet sein; insbesondere wenn alle vier Seitenwände 16 des Anhängers 10 für die Überdachung 11 genutzt werden.

Die Figuren 9A und 9D zeigen vier zu Figur 9 alternative Varianten hinsichtlich der Grundfläche der Kühlnebelstation bzw. des Kühlzelts.

Gemäß Figur 9A sowie 9B werden jeweils drei Wandelemente 15 bzw. Seitenwände 16 des Fahrzeuganhängers 10 in der Position A (Fig. 5) für die Überdachung 11 genutzt; gemäß Figur 9C und 9D jedoch nur zwei. Falls alle Wandelemente 15 bzw. Seitenwände 16 unabhängig voneinander verstellbar und insbesondere in die Position A überführbar sind, lässt sie die gewünschte Grundfläche der Kühlnebelstation 100 bzw. des Kühlzelts 200 variieren und somit an jedem Aufstellungsort individuell anpassen.

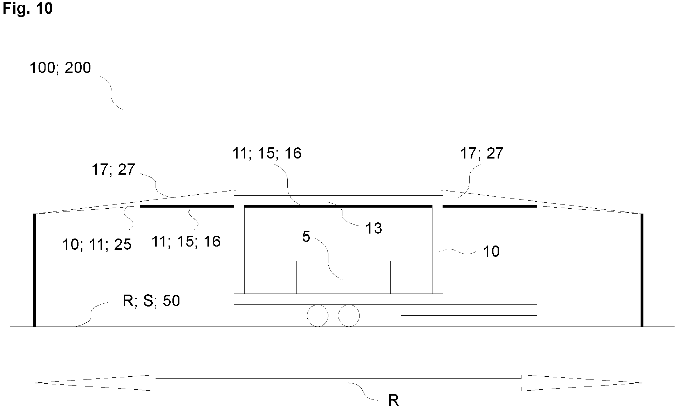

Figur 10 zeigt eine schematische Seitenansicht der exemplarischen Ausführungsform der als Kühlzelt ausgebildeten Kühlnebelstation aus Figur 8 und 9.

Hier ist nun auch in der Seitenansicht die seitlich außerhalb der Ränder der Wandelemente 15 bzw. Seitenwände 16 des Fahrzeuganhängers 10 noch weiter hinausreichende Dacherweiterung 25 erkennbar, die bis zur Umfangswandung 150 reicht.

Alternativ kann die Umfangswandung 150 auch so dicht an den Rändern der Wandelemente 15 bzw. Seitenwände 16 des Fahrzeuganhängers 10 angeordnet sein, dass keine oder zumindesst keine umlaufende Dacherweiterung 25 nötig ist; in diesem Fall genügen entsprechende Eckbereichsüberdachungen 17, die dann auch kleiner dimensioniert sein können.

Insbesondere die Eckbereichsüberdachungen 17 - vorzugsweise solche einer umlaufenden Dacherweiterung 25 - können mit Belüftungsöffnungen bzw. Luftaustauschbereichen 27 versehen sein, um selektiv in einem oberen Bereich der Kühlnebelstation 100 bzw. des Kühlzelts 200 einen teilweisen Luftaustausch zu ermöglichen, der den kälteren und somit schwereren Kühlnebel 9 nicht aus der Kühlnebelstation 100 bzw. dem Kühlzelt 200 vertreibt.

Beispielsweise lassen sich, wie in Figur 10 angedeutet, die jeweiligen zwei Innenkanten der Eckbereichsüberdachungen 17 als Luftaustauschbereiche 27 ausbilden oder damit versehen; beispielsweise indem sie höher und/oder mit einem größeren Neigungswinkel verlaufen als die (hier rechteckigen) Dachflächenelemente, die von den Wandelementen 15 bzw. Seitenwänden 16 des Fahrzeuganhängers 10 bis zu den dazu parallelen Wandabschnitten Umfangswandung 150 reichen.

Insbesondere kann die Ecke zwischen beiden Innenkanten der jeweiligen Eckbereichsüberdachung 17 höher angeordnet bzw. in einer höheren Position gehalten sein als das Anhängerdach 13 (Fig. 1). Die übrigen, hier rechteckigen Dachflächenelemente 33 der Dacherweiterung 25, die von den Wandelementen 15 bzw. Seitenwänden 16 des Fahrzeuganhängers 10 bis hin zu dazu parallelen Wandabschnitten Umfangswandung 150 reichen, sind jedoch vorzugsweise an den Wandelementen 15 bzw. Seitenwänden 16 des Fahrzeuganhängers 10 und somit in gleicher Höhe wie diese angebracht und/oder angeordnet.

Der Höhenunterschied zwischen ihnen und den Eckbereichsüberdachungen 17 (bzw. deren jeweiligen zwei Innenkanten) lässt sich als Luftaustauschbereich 27 ausbilden oder damit versehen; sei es über die gesamte Länge oder nur einen Teil der Länge der jeweiligen Innenkante der jeweiligen Eckbereichsüberdachung 17.

Im übrigen jedoch ist die Überdachung 11 geschlossen, d.h. frei von Öffnungen, durch die Wind und/oder Kühlnebel geblasen werden könnte. Das selektive Ausbilden lediglich der vier Ecksegel bzw. Eckbereichsüberdachungen 17 als oder mit Luftaustauschbereichen 27 bewirkt, dass dort bei Wind zunächst ein Staueffekt entsteht, der die Belüftung hemmt und somit begrenzt. Somit ist kein geradliniger Durchzug in einer Linie möglich, sondern lediglich ein gewisses Durcheinanderwirbeln der oberen Luftschichten im Habitat, ohne dass jedoch die darunter liegende Kaltluft bzw. der Kühlnebel 9 zu sehr durchmischt oder gar fortgeblasen wird.

Diese oder andere Luftaustauschbereiche 27 können ferner in der Überdachung 11 und/oder in einem oberen Bereich der Umfangswandung 150 vorgesehen sein; solche Luftaustauschbereiche können
- vorzugsweise flach und/oder schmal ausgebildet sein,
- zumindest einen geradlinigen Durchzug von Zugluft durch das Kühlzelt verhindern und
- das Kühlzelt in einem oberen Bereich durchquerende Zugluft zu einem mindestens zweimaligen, vorzugsweise mindestens dreimaligen, insbesondere mindestens viermaligen Richtungswechsel zwingen, insbesondere zu Richtungswechseln um jeweils zumindest 90° bis 180°, vorzugsweise um jeweils zumindest 135° bis 180°.

Sämtliche Flächenelemente 31, 32, 33 - seien es die Dachflächenelemente 33 oder diejenigen der Umfangswandung 150 - lassen sich, soweit sie aus Planen oder Geweben bzw. Textilien gebildet sind, an ihren Seitenkanten mit Hohlsäumen versehen, durch welche beispielsweise Gerüstrohre oder sonstige Rohre, etwa solche eines Bauzauns oder einer Dachstrebe oder auch Rohre oder Schläuche der Kühlvorrichtung geschoben werden können.

Die Überdachung 11 kann beispielsweise eine Strebenkonstruktion mit starren Dachstreben 26, vorzugsweise in Form eines Dachstrebenkranzes oder Dachstrebennetzes aufweisen, die bzw. der mit einem oberen Bereich der Umfangswandung 150 des Kühlzelts 200 fest verbunden ist.

Erfindungsgemäß wird somit zugleich ein Verfahren zum Bereitstellen eines mobilen, gekühlten Aufenthaltsbereichs R für Personen vorgeschlagen, der durch einen durch Wasserzerstäubung erzeugten wasserhaltigen Kühlnebel 9 gekühlt und/oder kühlbar ist. wobei an dem mobilen Fahrzeuganhänger 10 mit integrierter Kühlvorrichtung 1
- eine mindestens zweiseitig über den Fahrzeuganhänger 10 seitlich hinausragende Überdachung 11, 15, 17 und
- eine den Fahrzeuganhänger 10 beabstandet zu diesem seitlich umgebende, vorzugsweise vollständig umschließende Umfangswandung 150
ausgebildet wird.

Ferner wird erfindungsgemäß ein Verfahren zum Betreiben einer Kühlnebelstation 100, insbesondere eines Kühlzelts 200 mit einem gekühlten Aufenthaltsbereich R für Personen bereitgestellt, der durch einen durch Wasserzerstäubung erzeugten wasserhaltigen Kühlnebel 9 gekühlt wird.

Dabei wird zur Erzeugung des Kühlnebels 9 eine in einen mobilen Fahrzeuganhänger 10 integrierte Kühlvorrichtung 1 in der Weise betrieben, dass mit ihr eine zeitlich getaktete, intervallweise Kühlnebelerzeugung durchgeführt wird.

Die getaktete Realisierung separater Kühlperioden, während derer jeweils Kühlnebel erzeugt wird, im Wechsel mit Ruhepausen der Kühlnebelerzeugung ermöglicht durch das gezielte Einstellen der Dauer der Kühlperioden einerseits und der Ruhepausen andererseits, eine individuell steuerbare Kühlleistung und zugleich ein rasches Abklingen des visuellen Nebeleffekts für die Personen bzw. Passanten im Aufenthaltsbereich des Fahrzeuganhängers bzw. der Kühlnebelstation 100 und insbesondere des Kühlzelts 200 zu realisieren.

Gerade im Kühlzelt lassen sich die Kühl- und Nebeleffekts klimatisch durch den wie vorgeschlagen getakteten bzw. intervallweisen Betrieb besonders gezielt beeinflussen. Beispielsweise könnten die Kühlperioden eine jeweils identische Dauer von zwischen 5 und 3 Minuten, vorzugsweise von 15 Sekunden besitzen und die Ruhepausen dazwischen eine jeweils identisch Dauer von zwischen 5 Sekunden und 1 Minute, vorzugsweise von 5 Sekunden besitzen oder umgekehrt; daneben ist jede sonstige Taktung möglich. Die Dauer der Kühlperioden kann insbesondere durch Messeung ermittelt werden, nach welcher Zeitdauer die Sättigung der Luft und/oder die größtmögliche Abkühlung erreicht ist.

Insbesondere ist vorgesehen, dass bei der zeitlich getakteten, intervallweisen Kühlnebelerzeugung
- die Dauer der zeitlich voneinander beabstandeten Kühlperioden so eingestellt wird, dass der erzeugte Kühlnebel 9 in jeder Kühlperiode solange kontinuierlich erzeugt wird, bis die Umgebungsluft
- die von der Lufttemperatur abhängige maximale Sättigung, d.h. die maximale Luftfeuchtigkeit und/oder
- die Kühlgrenztemperatur, d.h. die von der Lufttemperatur und der maximalen Luftfeuchtigkeit abhängige Feuchtkugeltemperatur erreicht.

Ferner kann insbesondere vorgesehen sein, dass bei der zeitlich getakteten, intervallweisen Kühlnebelerzeugung die Dauer von Kühlpausen zwischen den zeitlich voneinander beabstandeten Kühlperioden so eingestellt wird, dass von der Umgebungsluft nicht aufgenommener Kühlnebel 9 bis zum Ende der Kühlpause oder schon vorher abgebaut, d.h. in der Umgebungsluft gelöst ist.

Schließlich kann vorgesehen sein, dass der zeitlich getakteten, intervallweisen Kühlnebelerzeugung vorangehend eine Gesamtkühlung des gesamten durch die Kühlnebelstation 100 und/oder das Kühlzelt 200 eingeschlossenen Luftvolumens durchgeführt wird, bis
- das eingeschlossene Luftvolumens mit Wasserdampf gesättigt ist und/oder
- alle Oberflächen innerhalb der Kühlnebelstation 100, insbesondere des Kühlzelts 200 mit einem Wasserfilm bedeckt sind.

Rein exemplarisch kann bei der Feinstvernebelung bzw. Kühlnebelerzeugung der Luft je Liter Wasser 630 Watt an Wärme entzogen werden. Bei einer Systemleistung von 150 Litern vernebelten Wassers pro Stunde entspricht dies hochgerechnet 94,5 kW an theoretischer Kühlleistung.

Bei Außentemperaturen von 30 °C im Schatten lässt sich durch den Kühlnebel die Temperatur so auf 22,3 °C im Habitat bzw. Kühlzelt absenken.

### Bezugszeichenliste

- 1: Kühlvorrichtung
- 2: Kühlnebeldüse
- 2a: Düsenanordnung
- 3: Druckleitung
- 4: Druckleitungsabschnitt
- 4a: erster Druckleitungsabschnitt
- 4b: zweiter Druckleitungsabschnitt
- 4c: weiterer Druckleitungsabschnitt
- 5: Druckwasserquelle
- 5a: Wasseranschluss
- 5b: Anlage zur Wassergewinnung
- 5c: Wassertank
- 5d: Entkeimungs- und/oder Filteranlage
- 6: Wasserpumpe
- 9: Kühlnebel
- 10: Fahrzeuganhänger
- 10a: Anhängerfahrgestell
- 10b: Anhängeraufbau
- 10c: Anhängerkupplung
- 11: Überdachung
- 12: Außenrand
- 13: Anhängerdach
- 14: Flachkonsole
- 15: Wandelement
- 16: Seitenwand
- 17: Eckbereichsüberdachung
- 19: Kühlnebelwand
- 20: Seitenabsperrung
- 21: Sitzgelegenheit
- 22: Stellfuß
- 25: Dacherweiterung
- 26: Dachstrebe
- 27: Luftaustauschbereich
- 30: Bauzaun
- 31: (oberes) Seitenflächenelement
- 32: (unteres) Seitenflächenelement
- 33: Dachflächenelement
- 50: Rundgang
- 100: Kühlnebelstation
- 150: Umfangswandung
- 200: Kühlzelt
- A: erste Position
- B: zweite Position
- R: Aufenthaltsbereich
- S: Umgebungsbereich

## Patentansprüche

1. Fahrzeuganhänger (10) mit integrierter Kühlvorrichtung (1),
umfassend
- ein durch ein Kraftfahrzeug mitführbares Anhänger-Fahrgestell (10a),
- einen Anhängeraufbau (10b) und
- eine integrierte Kühlvorrichtung (1),
**dadurch gekennzeichnet,**
**dass** die integrierte Kühlvorrichtung (1) einen den Fahrzeuganhänger (10) und/oder einen daran angrenzenden Umgebungsbereich (S) umfassenden, gekühlten Aufenthaltsbereich (R) für Personen bereitstellt, indem sie durch Wasserzerstäubung einen wasserhaltigen Kühlnebel (9) erzeugt und in den Aufenthaltsbereich (R) abgibt.

2. Fahrzeuganhänger (10) nach Anspruch 1,
ferner umfassend
eine zumindest vorübergehend einrichtbare Überdachung (11) zum Überdachen des Aufenthaltsbereichs (R) in oder auf dem Fahrzeuganhänger (10) und/oder in dem angrenzenden Umgebungsbereich (S),
wobei die Kühlvorrichtung (1)
- ein in dem Aufenthaltsbereich (R) befindliches Luftvolumen von oben her mit eingesprühtem wasserhaltigen Kühlnebel (9) anreichert und/oder sättigt und/oder
- den wasserhaltigen Kühlnebel (9) von der Überdachung (11) aus, insbesondere ganz, überwiegend oder zumindest teilweise von einem Außenrand (12) der Überdachung (11) aus erzeugt und/oder in den Aufenthaltsbereich (R) abgibt.

3. Fahrzeuganhänger (10) nach Anspruch 1 oder 2,
**dadurch gekennzeichnet,**
**dass** die Kühlvorrichtung (1) den wasserhaltigen Kühlnebel (9) mit Hilfe einer Düsenanordnung (2a) von Kühlnebeldüsen (2) erzeugt und abgibt, an die unter Überdruck stehendes Wasser zum Zerstäuben herangeführt wird.

4. Fahrzeuganhänger (10) nach einem der Ansprüche 1 bis 3,
**dadurch gekennzeichnet,**
**dass** der Fahrzeuganhänger (10) eine Anzahl von Wandelementen (15) aufweist, die
- in einer in Überkopfhöhe befindlichen ersten Position (A), in der sie den Aufenthaltsbereich (R) und/oder Umgebungsbereich (S) überdachen, und
- in einer zweiten Position (B), in der sie bei Nichtgebrauch der integrierten Kühlvorrichtung (1) den Fahrzeuganhänger (10) als Seitenwände (16) verschließen und/oder sichern,
positionierbar und/oder montierbar sind,
wobei die Wandelemente (15)
- an oder nahe einer zum Außenrand (12) der Überdachung (11) gehörigen Kante und/oder
- nahe einer oder mehrerer Kanten der Wandelemente (15) mit jeweiligen Druckleitung (3), Druckleitungsabschnitten (4) und/oder Kühlnebeldüsen (2) versehen oder versehbar sind.

5. Fahrzeuganhänger (10) nach einem der Ansprüche 1 bis 4,
**dadurch gekennzeichnet,**
**dass** der Fahrzeuganhänger (10) mit Hilfe ausklappbarer und/oder ausschwenkbarer Wandelemente (15) den Kühlnebel (9) in einen überdachten Umgebungsbereich (S) und/oder Aufenthaltsbereich (R) hineinsprüht, der die Grundfläche des Anhängerfahrgestells (10a) von außen umgibt.

6. Fahrzeuganhänger (10) nach einem der Ansprüche 3 bis 5,
**dadurch gekennzeichnet,**
**dass** die Düsenanordnung (2a)
- Kühlnebeldüsen (2), die relativ zur vertikalen Richtung in mindestens zwei unterschiedlich großen Neigungswinkeln orientiert sind,
- Kühlnebeldüsen (2), die in Umfangsrichtung um den Mittelpunkt oder die Mittelachse des Anhängeraufbaus (10b) herum in mindestens vier, mindestens acht oder mindestens zwölf unterschiedliche Richtungen orientiert angeordnet sind,
- Kühlnebeldüsen (2), die in Umfangsrichtung um die Mittelachse ihrer jeweiligen Druckleitung (3) oder ihres jeweiligen Druckleitungsabschnitts (4) herum in mindestens zwei, mindestens drei oder mindestens vier verschiedenen azimutalen Winkeln orientiert angebracht sind, und/oder
- mindestens zwei Sorten von Kühlnebeldüsen (2) mit unterschiedlich großem Kegelöffnungswinkel ihres jeweils versprühten Kühlkegels (9) aufweist.

7. Fahrzeuganhänger (10) nach einem der Ansprüche 1 bis 6,
**dadurch gekennzeichnet**,
weiterhin umfassend
- einen Wasseranschluss (5a),
- einen Wassertank (5c)
- eine Anlage (5b) zur Wassergewinnung beispielsweise durch Umkehrosmose,
- eine Wasserpumpe (6), insbesondere Hochdruckpumpe und/oder
- eine Entkeimungs- und/oder Filteranlage (5d) zur Verbesserung der Wasserqualität sowie
- vorzugsweise eine Stromversorgung oder anderweitige Energiequelle zumindest zum Betreiben der Wasserpumpe (6) und/oder der Entkeimungs- und/oder Filteranlage (5d).

8. Fahrzeuganhänger (10) nach einem der Ansprüche 4 bis 7,
**dadurch gekennzeichnet,**
**dass** der Fahrzeuganhänger (10) je Wandelement (15) eine separate, mit jeweils mehreren Kühlnebeldüsen (2) versehene Druckleitung (3) aufweist, deren entlang des Wandelements (15) verlaufender Druckleitungsabschnitt (4; 4b) mittels
- eines druckbeständigen Schraubgewindes,
- eines biegsamen Druckleitungsübergangs oder
- eines gelenkigen Druckleitungübergangs
mit einem von einer Druckwasserquelle (5) herangeführten jeweiligen Druckleitungsabschnitt (4; 4a; 4c) verbunden oder verbindbar sind.

9. Fahrzeuganhänger (10) nach einem der Ansprüche 1 bis 8,
**dadurch gekennzeichnet,**
**dass** die Kühlvorrichtung (1) den wasserhaltigen Kühlnebel (9) durch eine adiabatische Verdunstung erzeugt und/oder aus Wasser erzeugt, das mit einem Überdruck größer als 30 bar, vorzugsweise größer als 50 bar gefördert wird.

10. Mobile Kühlnebelstation (100)
- mit einem Fahrzeuganhänger (10) nach einem der Ansprüche 1 bis 9 sowie vorzugsweise
- mit einer Anzahl von in dem gekühlten Aufenthaltsbereich (R) bereitgestellten Stühlen, Bänken oder sonstigen Sitzgelegenheiten (21) und/oder
- mit einer Anzahl von den gekühlten Aufenthaltsbereich (R) abgrenzenden Seitenabsperrungen (20) und/oder mit einer anderweitigen Seitenwandung, insbesondere Umfangswandung (150).

11. Kühlnebelstation (100) nach Anspruch 10,
**dadurch gekennzeichnet,**
**dass** die Kühlnebelstation (100) als Kühlzelt (200) ausgebildet ist, das ein Entweichen des wasserhaltigen Kühlnebels (9) verhindert und/oder erschwert, wobei das Kühlzelt (200) vorzugsweise folgendes umfasst:
- den Fahrzeuganhänger (10) nach einem der Ansprüche 1 bis 10,
- eine zumindest vorübergehend eingerichtete, vorzugsweise kühlnebeldichte Seitenwandung und/oder Umfangswandung (150), die
- seitlich außerhalb des Fahrzeuganhängers (10), insbesondere um den Fahrzeuganhänger (10) herum und/oder seitlich beabstandet vom Fahrzeuganhänger (10) aufgebaut ist und/oder
- den Fahrzeuganhänger (10) sowie einen ihn umgebendenden Aufenthaltsbereich (R) und/oder Umgebungsbereich (S) seitlich umgibt, insbesondere seitlich vollständig umschließt, und
- eine zumindest vorübergehend eingerichtete, vorzugsweise kühlnebeldichte Überdachung (11) zum Überdachen des Aufenthaltsbereichs (R) in oder auf dem Fahrzeuganhänger (10) und/oder in dem angrenzenden Umgebungsbereich (S).

12. Kühlnebelstation (100) nach Anspruch 10 oder 11,
**dadurch gekennzeichnet,**
**dass** die Überdachung (11)
- bis an die Umfangswandung (150) der Kühlnebelstation (100) und/oder des Kühlzelts (200) herangeführt,
- mit der Umfangswandung (150) verbunden und/oder
- durch die Umfangswandung (150) aufgespannt ist.

13. Kühlnebelstation (100) nach einem der Ansprüche 10 bis 12,
**dadurch gekennzeichnet**,
das die Kühlnebelstation (100) und/oder das Kühlzelt (200) einen Rundgang (50) aufweist, der den Fahrzeuganhänger (10) umgibt, wobei der Rundgang (50)
- von der Umfangswandung (150) seitlich umgeben ist und/oder
- von der Überdachung (11) überdacht, insbesondere überspannt ist.

14. Verfahren zum Bereitstellen eines mobilen, gekühlten Aufenthaltsbereichs (R) für Personen, der durch einen durch Wasserzerstäubung erzeugten wasserhaltigen Kühlnebel (9) gekühlt und/oder kühlbar ist,
wobei an einem mobilen Fahrzeuganhänger (10) mit integrierter Kühlvorrichtung (1), vorzugsweise an einem Fahrzeuganhänger (10) nach einem der Ansprüche 1 bis 9
- eine mindestens zweiseitig über den Fahrzeuganhänger (10) seitlich hinausragende Überdachung (11, 15, 17) und
- eine den Fahrzeuganhänger (10) beabstandet zu diesem seitlich umgebende, vorzugsweise vollständig umschließende Umfangswandung (150) ausgebildet wird.

15. Verfahren zum Betreiben einer Kühlnebelstation (100), insbesondere eines Kühlzelts (200) mit einem gekühlten Aufenthaltsbereich (R) für Personen, der durch einen durch Wasserzerstäubung erzeugten wasserhaltigen Kühlnebel (9) gekühlt wird,
wobei zur Erzeugung des Kühlnebels (9) eine in einen mobilen Fahrzeuganhänger (10) integrierte Kühlvorrichtung (1) in der Weise betrieben wird, dass mit ihr eine zeitlich getaktete, intervallweise Kühlnebelerzeugung durchgeführt wird.

16. Verfahren nach Anspruch 15,
**dadurch gekennzeichnet,**
**dass** bei der zeitlich getakteten, intervallweisen Kühlnebelerzeugung
- die Dauer der zeitlich voneinander beabstandeten Kühlperioden so eingestellt wird, dass der erzeugte Kühlnebel (9) in jeder Kühlperiode solange kontinuierlich erzeugt wird, bis die Umgebungsluft
- die von der Lufttemperatur abhängige maximale Sättigung, d.h. die maximale Luftfeuchtigkeit und/oder
- die Kühlgrenztemperatur, d.h. die von der Lufttemperatur und der maximalen Luftfeuchtigkeit abhängige Feuchtkugeltemperatur erreicht.

17. Verfahren nach Anspruch 16,
**dadurch gekennzeichnet,**
**dass** bei der zeitlich getakteten, intervallweisen Kühlnebelerzeugung
- die Dauer von Kühlpausen zwischen den zeitlich voneinander beabstandeten Kühlperioden so eingestellt wird, dass
- von der Umgebungsluft nicht aufgenommener Kühlnebel (9) bis zum Ende der Kühlpause oder schon vorher abgebaut, d.h. in der Umgebungsluft gelöst ist.

18. Verfahren nach Anspruch 16 oder 17,
**dadurch gekennzeichnet,**
**dass** der zeitlich getakteten, intervallweisen Kühlnebelerzeugung vorangehend eine Gesamtkühlung des gesamten durch die Kühlnebelstation (100) und/oder das Kühlzelt (200) eingeschlossenen Luftvolumens durchgeführt wird, bis
- das eingeschlossene Luftvolumens mit Wasserdampf gesättigt ist und/oder
- alle Oberflächen innerhalb der Kühlnebelstation (100), insbesondere des Kühlzelts (200) mit einem Wasserfilm bedeckt sind.
